# EUROPEAN PATENT APPLICATION

(11) **EP 1 551 180 A1**
(43) Date of publication of application: **06.07.2005**
(21) Application number: 03748647.9
(22) Date of filing: 01.10.2003
(51) Int. Cl.: H04N 5/92

(54) **INFORMATION RECORDING MEDIUM, INFORMATION RECORDING DEVICE AND METHOD, INFORMATION REPRODUCTION DEVICE AND METHOD, INFORMATION RECORDING/REPRODUCTION DEVICE AND METHOD, INFORMATION RECORDING PROGRAM, AND INFORMATION REPRODUCTION PROGRAM**

(30) Priority: 01.10.2002 JP 2002288274
(71) Applicant: Pioneer Corporation, Tokyo 153-8654 (JP)
(72) Inventor: KANEGAE, Tohru Pioneer Corp., Tokorozawa Works., Saitama 359-8522 (JP); KODA, Takeshi Pioneer Corp., Tokorozawa Works., Saitama 359-8522 (JP); SAWABE, Takao Pioneer Corp., Tokorozawa Works., Saitama 359-8522 (JP); NAKAHARA, Masanori Pioneer Corp.,Tokorozawa Works., Saitama 359-8522 (JP); TAKAKUWA, Nobuyuki Pioneer Corp., Tokorozawa Works, Saitama 359-8522 (JP); FUKUDA, Yasuko Pioneer Corp., Tokorozawa Works., Saitama 359-8522 (JP); IMAMURA, Akira Pioneer Corp., Tokorozawa Works., Saitama 359-8522 (JP)
(74) Representative: Haley, Stephen
(86) International application number: PCT/JP2003/012589
(87) International publication number: WO 2004/032503

(57) **Abstract**

On an information record medium, there are recorded a plurality of still picture information and information on a transition effect during successive reproduction of the plurality of still picture information. As the transition between still pictures reproduced successively, it is possible not only to perform a normal transition in which after display of one still picture is ended, display of the next still picture is started, but also a cross transition in which the display end of one still picture and the display start of the next still picture can be performed concurrently. During successive reproduction of the still picture information, the transition effect information recorded corresponding to each still picture set is referenced so that each still picture is reproduced so as to produce the transition effect at switching of still pictures.

## Description

### Technical Field

The present invention relates to an information record medium on which still pictures are recorded, reproduction of the still pictures from the information record medium and record of the still pictures onto the information record medium.

### Background Technique

As an information record medium on which plural still pictures are recorded, there is known a DVD-audio disc. On the DVD-audio disc, plural still picture information are recorded in addition to audio information such as music, and such the still picture information can be reproduced in a manner being synchronized with reproduction of the audio information. Therefore, with the reproduction of the audio information, the plural still picture information can be successively reproduced.

Since the still picture includes no moving component unlike a moving picture, mere reproduction of the plural still pictures by switching them is sometimes too simple and uninteresting. Therefore, at the start and ending of the reproduction, if various kinds of transitions are given to even the same still pictures, variations can be added to the reproduction of the still pictures.

### Disclosure of Invention

It is an object of this invention to give various kinds of transition effects to reproduction of still pictures with an information amount as small as possible.

According to one aspect of the present invention, there is provided an information record medium including: plural still picture information; and transition effect information of each still picture information between plural still picture information to be successively reproduced, wherein the transition effect information includes: transition effect kind information indicating a kind of transition effect; transition effect time information indicating a period of the transition effect; and cross transition information indicating whether or not to apply a cross transition executing the transition effect between the successive still picture information in parallel in terms of time.

According to another aspect of the present invention, there is provided an information record apparatus including: a first record unit which records plural still picture information on an information record medium; and a second record unit which records, on the information record medium, transition effect information of each still picture information between plural still picture information to be successively reproduced, wherein the transition effect information includes: transition effect kind information indicating a kind of transition effect; transition effect time information indicating a period of the transition effect; and cross transition information indicating whether or not to apply a cross transition executing a transition effect between the successive still picture information in parallel in terms of time.

According to another aspect of the present invention, there is provided an information record method including: a first record process which records plural still picture information on an information recordmedium; and a second recordprocess which records, on the information record medium, transition effect information of each still picture information between plural still picture information to be successively reproduced, wherein the transition effect information includes: transition effect kind information indicating a kind of transition effect; transition effect time information indicating a period of the transition effect; and cross transition information indicating whether or not to apply a cross transition executing the transition effect between the successive still picture information in parallel in terms of time.

According to another aspect of the present invention, there is provided an information reproduction apparatus which reproduces the information record medium according to any one of claims 1 to 5, including: a reading unit which reads the plural still picture information and the transition effect information from the information record medium; and a reproduction unit which controls presence or absence of application of the cross transition in accordance with the transition effect information and reproduces the plural still pictures.

According to another aspect of the present invention, there is provided an information reproduction method which reproduces the information record medium according to any one of claims 1 to 5, including: a reading process which reads the plural still picture information and the transition effect information from the information record medium; and a reproduction process which controls presence or absence of application of the cross transition in accordance with the transition effect information and reproduces the plural still pictures.

According to another aspect of the present invention, there is provided an information record reproduction apparatus including: a first record unit which records plural still picture information on an information record medium; a second record unit which records, on the information record medium, transition effect information including transition effect kind information indicating a kind of transition effect, transition effect time information indicating a period of the transition effect and cross transition information indicating whether or not to apply a cross transition executing the transition effect between successive still picture information in parallel in terms of time, for each still picture information between the plural still picture information to be successively reproduced; a reading unit which reads the plural still picture information and the transition effect information from the information record medium; and a reproduction unit which controls presence or absence of application of the cross transition in accordance with the transition effect information and reproduces the plural still pictures.

According to another aspect of the present invention, there is provided an information record reproduction method including: a first record process which records plural still picture information on an information recordmedium; a second record process which records, on the information record medium, transition effect information including transition effect kind information including a kind of transition effect, transition effect time information indicating a period of the transition effect and cross transition information indicating whether or not to apply a cross transition executing the transition effect between successive still picture information in parallel in terms of time, for each still picture information between the plural still picture information to be successively reproduced; a reading process which reads the plural still picture information and the transition effect information from the information record medium; and a reproduction process which controls presence or absence of application of the cross transition in accordance with the transition effect information and reproduces the plural still pictures.

According to another aspect of the present invention, there is provided an information record program executed on a computer, making the computer function as: a first record unit which records plural still picture information on an information record medium; and a second record unit which records, on the information record medium, transition effect information of each still picture information between plural still picture information to be successively reproduced, wherein the transition effect information includes transition effect kind information indicating a kind of transition effect, transition effect time information indicating a period of the transition effect, cross transition information indicating whether or not to apply cross transition executing the transition effect between the successive still picture information in parallel in terms of time.

According to another aspect of the present invention, there is provided an information reproduction program executed on a computer, making the computer function as: a reading unit which reads the plural still picture information and the transition effect information from the information record medium according to any one of claims 1 to 5; and a reproduction unit which controls presence or absence of application of the cross transition in accordance with the transition effect information and reproduces the plural still pictures.

### BRIEF DESCRIPTION OF THE DRAWINGS

FIG. 1 illustrates a basic structure of an optical disc according to an embodiment of an information recordmedium according to the present invention, wherein its upper part illustrates a general plan view of the optical disc having plural areas and its lower part illustrates a schematic conceptual diagram of an area structure in a radius direction corresponding to the general plan view in the upper part.
FIG. 2A illustrates a schematic conceptual diagram of a conventional program stream of MPEG2, FIG. 2B illustrates a schematic conceptual diagram of a transport stream of MPEG2 used in the embodiment, and FIG. 2C illustrates a schematic conceptual diagram of a program stream of MPEG2 used in the embodiment.
FIG. 3 is a diagram schematically illustrating a data structure recorded onto the optical disc in the embodiment.
FIG. 4 is a schematic diagram schematically illustrating a data structure in each title shown in FIG. 3.
FIG. 5 is a schematic diagram schematically illustrating a data structure in each playlist set shown in FIG. 3.
FIG. 6 is a schematic diagram illustrating a structure in each playlist set.
FIG. 7A schematically illustrates a data structure of a transport stream obj ect item, and FIG. 7B is a diagram schematically illustrating a data structure of a still picture object item.
FIG. 8 is a conceptual diagram illustrating a structure of a title element in a case that the playlist set has plural playlists.
FIG. 9 is a conceptual diagram illustrating a structure of the title element in a case the playlist set has a single playlist.
FIG. 10 is a view schematically illustrating a detail of a data structure in each object shown in FIG. 3.
FIG. 11 is a view conceptually illustrating a situation in the embodiment that an elementary stream for a program #1, shown in the upper column, and en elementary stream for a program #2, shown in the middle column, are multiplexed to form a transport stream for these two-programs, on the basis of a time scale in a horizontal direction.
FIG. 12 is a view conceptually illustrating an image of TS packets multiplexed in one transport stream in the embodiment, as a packet arrangement based on the time scale.
FIG. 13 is a view schematically illustrating a logical structure of data on an optical disc in the embodiment, focusing on development from a logic hierarchy to an object hierarchy or an entity hierarchy.
FIG. 14 is a block-diagram schematically illustrating an information record reproduction apparatus according to the embodiment of the present invention.
FIG. 15 is a flow chart indicating a recording operation (part 1) of the information record reproduction apparatus in the embodiment.
FIG. 16 is a flow chart indicating a recording operation (part 2) of the information record reproduction apparatus in the embodiment.
FIG. 17 is a flow chart indicating a recording operation (part 3) of the information record reproduction apparatus in the embodiment.
FIG. 18 is a flow chart indicating a recording operation (part 4) of the information record reproduction apparatus in the embodiment.
FIG. 19 is a flow chart indicating a reproduction operation of the information record reproduction apparatus in the embodiment.
FIG. 20 is a diagram schematically illustrating a data structure of a still picture object.
FIG. 21 is a diagram schematically illustrating a data structure of a still picture playitem.
FIG. 22 is a diagram illustrating a reproduction method of the still picture according to the still picture playitem.
FIG. 23 is a diagram schematically illustrating a situation of the reproduction of the plural playitems defined by the still picture playitem.
FIG. 24 is a diagram comparatively explaining still picture reproduction methods by a normal transition and a cross transition.
FIG. 25 is a diagram explaining a difference of total reproduction times of the still picture playitems in a case of executing an internal cross transition and in case of not executing the internal cross transition.
FIG. 26 is a block diagram illustrating components relating to still picture reproduction in a video decoder shown in FIG. 9.
FIG. 27 is a diagram illustrating storage data in a video buffer in a case of the normal transition.
FIG. 28 is a diagram illustrating the storage data in the video buffer in a case of the cross transition.
FIG. 29A is a flow chart of the still picture playlist reproduction process, and FIG. 29B is a flow chart of a stationary display time end waiting process included in the still picture playlist reproduction process.
FIG. 30 is a flow chart of the still picture playitem reproduction process in the case of the normal transition during the still picture playlist reproduction process.
FIG. 31 is a flow chart of the still picture playitem reproduction process in the case of the cross transition during the still picture playlist reproduction process.

### DETAILED DESCRIPTION OF THE PREFERRED EMBODIMENTS

In an embodiment of the present invention, the plural still picture information and transition effect information of each still picture information between the plural still picture information to be successively reproduced are recorded onto the information record medium. The transition effect information includes transition effect kind information indicating a kind of transition effect, transition effect time information indicating a period of the transition effect and cross transition information indicating whether to or not to apply a cross transition executing the transition effect between the successive still picture information in parallel in terms of time.

As the information record medium, a CD, a DVD and a medium such as an optical disc having high recording density improved compared with the CD and the DVD are preferably usable. However, the present invention can be applied to a recording medium other than the optical disc.

On the information record medium, first, the plural still picture information individually reproducible are recorded, and they can be reproduced successively. In the present embodiment, when the plural still picture information are reproduced, an effect (transition effect) at the time of the transition (i.e., a time at which the reproduction is switched from one still picture information to a next still picture information) can be defined.

The transition effect kind information can be prescribed as information for designating any one of a wipe display, a slide display or a dissolve display of the still picture information at the time of starting or ending a display of the still picture information, for example. Thereby, between the still picture information to be successively reproduced, the transitions of the still picture information can be performed by different transition kinds. The transition effect time information is information for defining during how long time width such the transition effect of each kind is executed. Therefore, if different transition effect time information are defined between the plural still picture information, variation can be obtained, e.g., the still picture display is slowly started or ended at a certain transition position, and is instantly started or ended at the other transition position.

Further, in the present invention, the cross transition can be executed between the successive still picture information. The cross transition means an execution of the transition effects between the successive still picture information in parallel in terms of time. Concretely, when the second still picture information is displayed after the first still picture information, the transitions of the end of the display of the first still picture information and the start of the display of the second still picture information are executed in parallel. Thereby, at the time of switching the display of the first still picture information to the second still picture information, the still picture information can be switched, not in a manner that the second still picture information is displayed after the first still picture information goes off, but in a manner that the display of the first still picture information is gradually ended and the display of the second still picture information is gradually started. In the present embodiment, whether to or not to apply such the cross transition can arbitrarily be set.

In addition, the plural still picture information to be successively reproduced can logically be reproduced as a set of a predetermined number, and the still picture information of the predetermined number is called "still picture set". Therefore, by continuing the reproduction of the still picture set, a lot of still picture information can be reproduced successively. In one still picture set, the transition effect information of each still picture information is defined to be same for all of the stillpictureinformation. Therefore,asforthe crosstransition, whether to or not to apply the cross transition has to be unified and be set to the transitions between the plural still picture information included in the same still picture set, for example. Therefore, by logically defining the plural still picture information, to which it is appropriate to apply the same transition effect, as one still picture set, it becomes unnecessary to individually assign the transition effect information to all the still picture information. Therefore, various kinds of transition effects can effectively be set with a small information amount.

The reproduction sequence information at the time of successively reproducing the plural still picture information can be recorded onto the information record medium as the playlist information for example,- and in-that case, each transition effect information can be included in the playlist information. Thereby, it becomes possible to define and store the transition effect information in association with to the reproduction sequence.

In another embodiment of the present invention, there are provided an information record apparatus and an information record method which record the above-mentioned still picture information and each transition effect information onto the information record medium such as the optical disc. Also, there are provided an information reproduction apparatus and an information reproduction method which can read each still picture information from the above-mentioned information record medium on which each information is recorded and can realize the transition effect based on the transition effect information defined to each still picture information to reproduce each still picture information. Furthermore, there can be provided an information record reproduction apparatus and an information record reproduction method having functions of both recording and reproducing the information. Additionally, there can be provided an information record program which makes a computer function as an information record apparatus and an information reproduction program which makes the computer function as an information reproduction apparatus, which are executed on the computer.

Each of the above-mentioned embodiments will be specified by explanations below.

### [Information Record Medium]

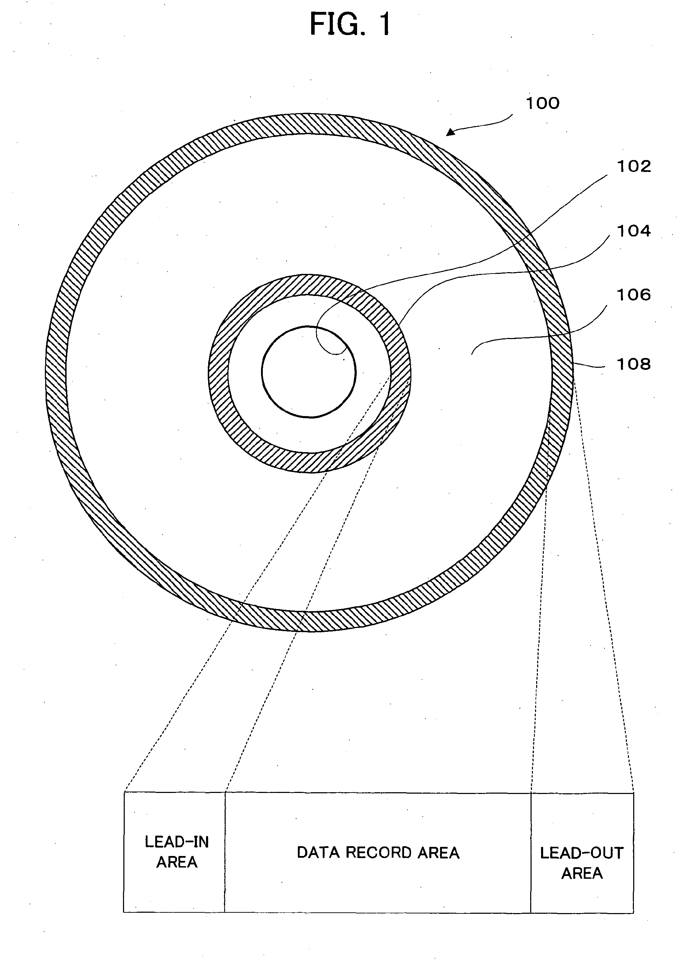

The information record medium of the present invention is discussed, with reference to its embodiments, as well as FIG. 1 to FIG. 13. In these embodiments, the information record medium of the present invention is applied to an optical disc capable of recording (writing) and reproducing (reading).

Firstly, with reference to FIG. 1, a fundamental structure of the optical disc in an embodiment is discussed. FIG. 1 illustrates, in its-upper part, a general plan view of the optical disc structure having a plurality of areas, and illustrates conceptually, in its lower part, an area structure in the radius direction corresponding to the upper part.

As shown in FIG. 1, the optical disc 100 may be recorded by various record methods, such as a magneto-optical method, a phase change method, capable of recording (writing) only once or a plurality of times. Similarly to DVDs, the optical disc 100 has a lead-in area 104, a data area 106 and a lead-out area 108, from the inner circumference around a center hole 102 to the outer circumference, on the record surface of the disc body measuring about 12 cm in diameter. In each area, groove tracks and land tracks may be alternately arranged, concentrically or spirally around the center hole 102. The groove tracks may be wobbled. Furthermore, pre-pits may be formed on one or both of these tracks. Incidentally, the present invention is not exclusively limited to the optical disc having three areas mentioned above.

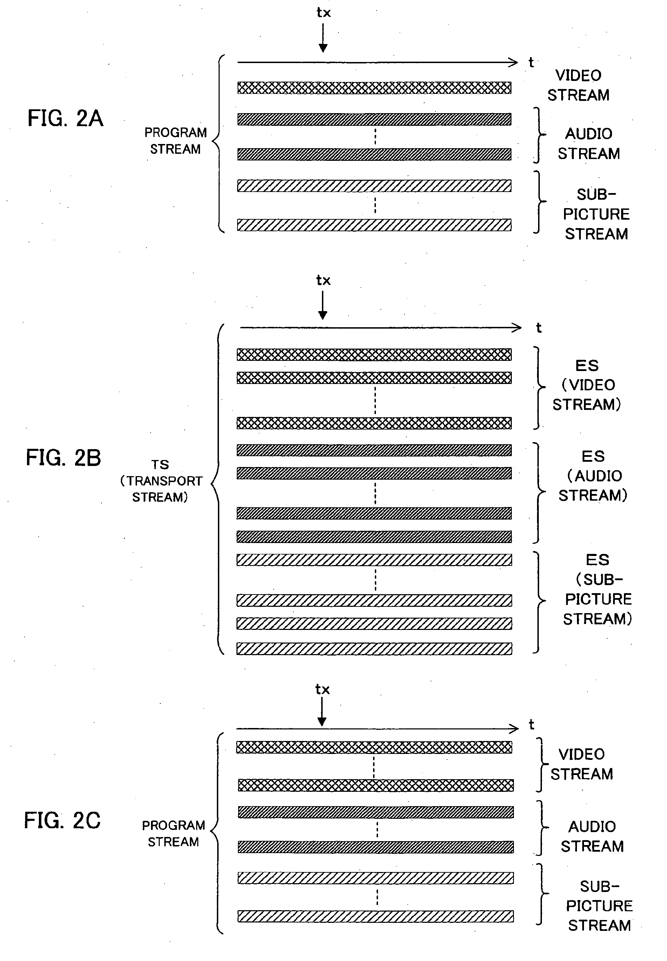

Next, with reference to FIGS. 2A to 2C, the structures of the transport stream (TS) and the program stream (PS) to be recorded onto the optical disc in the embodiment are discussed. FIG. 2 A schematically illustrates a MPEG2 program stream structure of a conventional DVD for comparison, FIG. 2 B schematically illustrates a MPEG2 transport stream (TS) structure. Furthermore, FIG. 2C schematically illustrates a MPEG2 program stream structure in the present invention.

In FIG. 2A, one program stream to be recorded in the conventional DVD includes only one video stream for video data as main picture information, along the time axis t, and further includes up to 8 audio streams for audio data as audio information and up to 32 sub-picture streams for sub-picture data as sub-picture information. That is, the video data to be multiplexed at an arbitrary time point tx relates to only one video stream. For example, a plurality of video streams corresponding to a plurality of TV programs or a plurality of movies cannot be included at the same time in the program stream. It is not possible to multiplex a plurality of TV programs and transfer or record them, in a program stream format of a DVD having only one video stream, because at least one video stream is required for each TV program, in order to transfer or record the multiplexed TV program or the like involving a video image.

In FIG. 2B, one transport stream (TS) to be recorded in the optical disc 100 of the present invention includes a plurality of video streams as elementary streams (ES) for video data as main picture information, and further includes a plurality of audio streams as elementary streams (ES) for audio data as audio information and a plurality of sub-picture streams as elementary streams (ES) for sub-picture as sub-picture information. That is, the video data to be multiplexed at an arbitrary time point tx relates to a plurality of video streams. For example, a plurality of video streams that may correspond to a plurality of TV programs or a plurality of movies can be included at the same time in the transport stream. Thus, it is possible to multiplex a plurality of TV programs and transfer or record them, in the transport stream format having a plurality of video streams. However, the sub-picture stream is not transferred in a digital broadcasting employing the existing transport stream.

In FIG. 2C, one program stream (PS) to be recorded onto the optical disc 100 of the present invention includes a plurality of video streams for video data as main picture information, and further includes a plurality of audio streams for audio data as audio information and a plurality of sub-picture streams for sub-picture data as sub-picture information. That is, the video data to be multiplexed at an arbitrary time point tx relates to a plurality of video streams. For example, a plurality of video streams that may correspond to a plurality of TV programs or a plurality of movies can be included at the same time in the program stream.

Incidentally, for convenience of explanation, the video stream, the audio stream and the sub-picture stream are arranged in this order from the top in FIG. 2A to FIG. 2C. Nevertheless, this order or sequence does not correspond to an order or sequence for multiplexing packet by packet as mentioned below. In the transport stream, conceptually, a set of one video stream, two audio streams and two sub-picture streams corresponds to one program for example.

The optical disc 100 in the aforementioned embodiment is adapted to multi-record the transport stream (TS) as shown in FIG. 2B, i.e. to record a plurality of programs at the same time, within the restriction of the record rate. Furthermore, instead of or in addition to this transport stream, the program stream (PS) as shown in FIG. 2C can be multi-recorded onto the same optical disc 100.

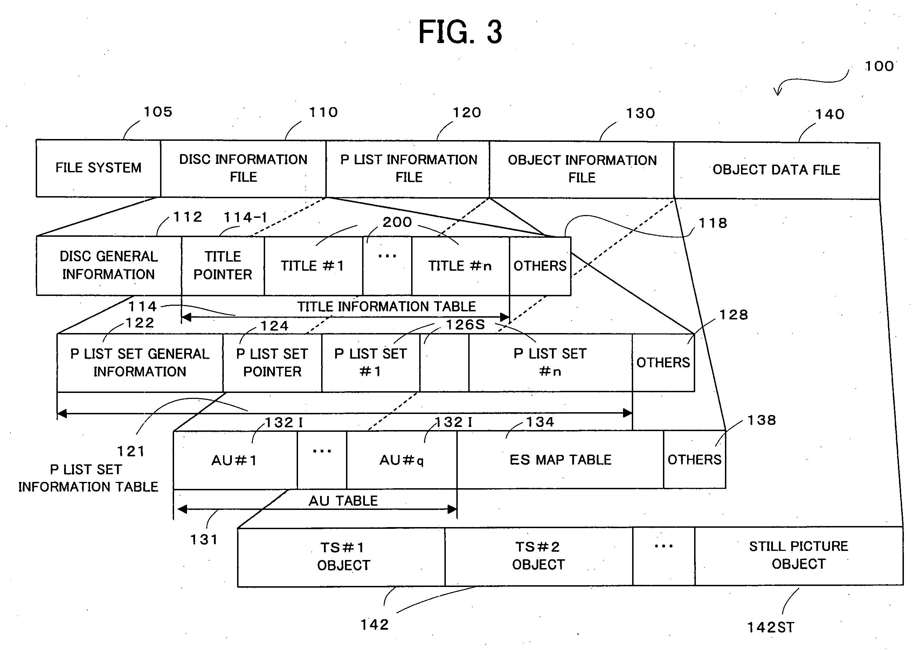

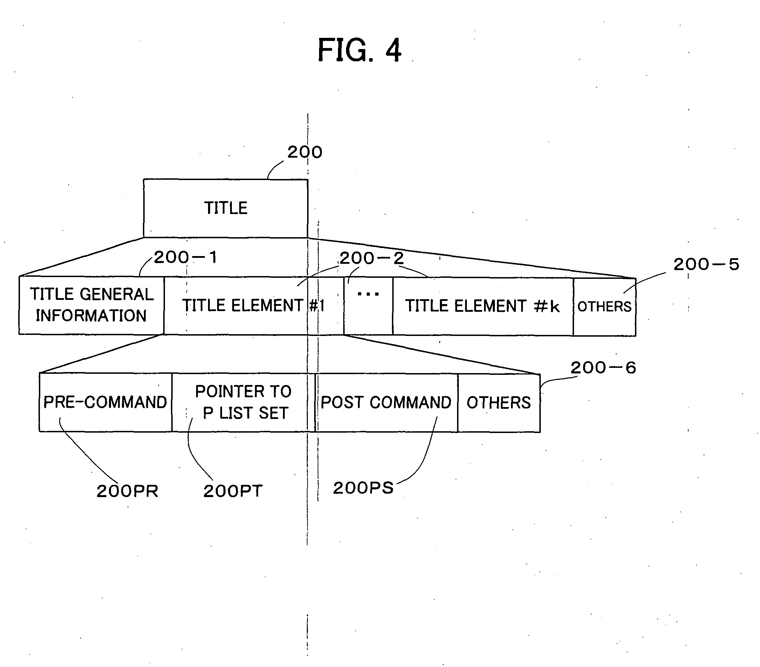

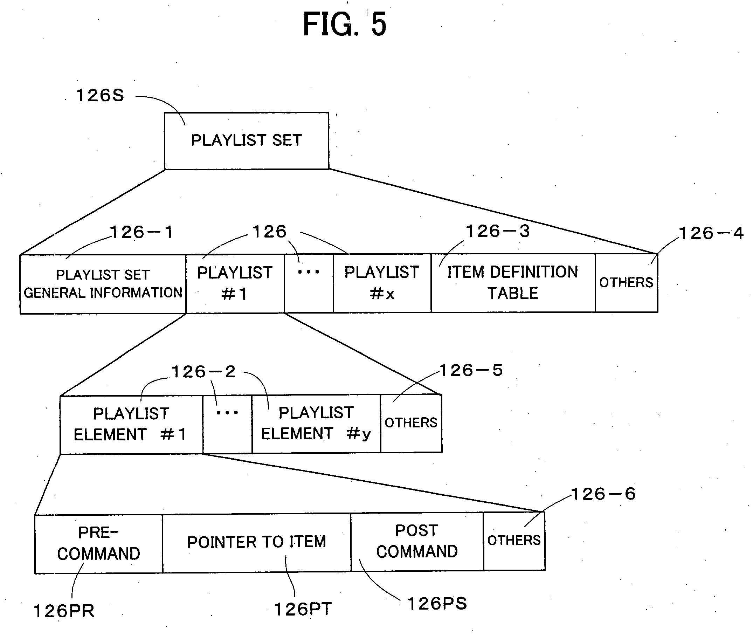

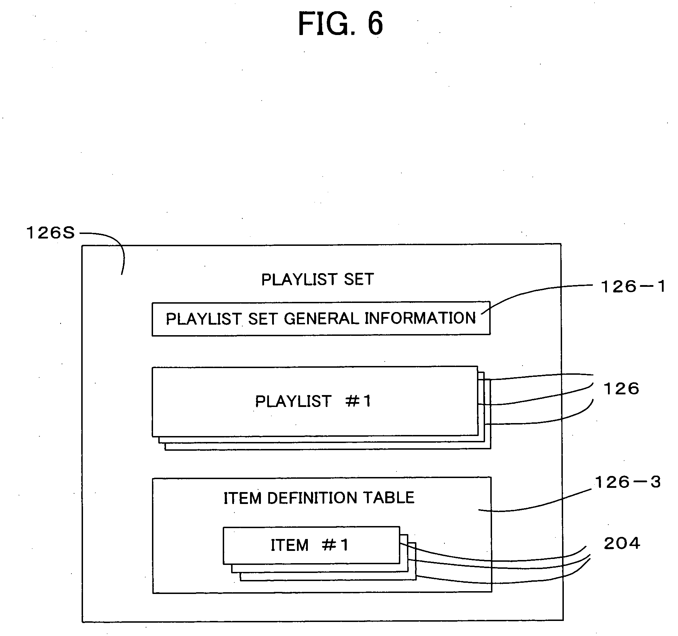

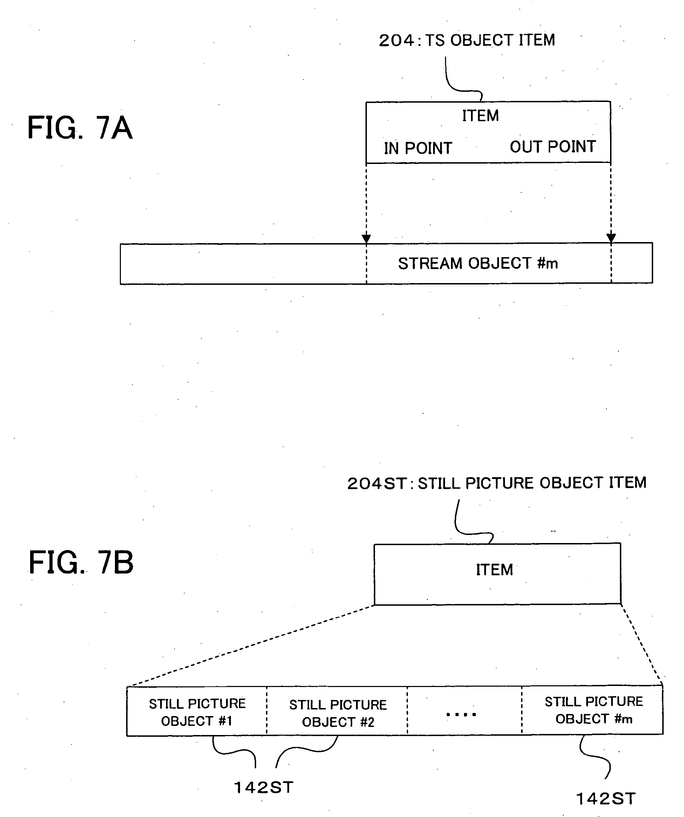

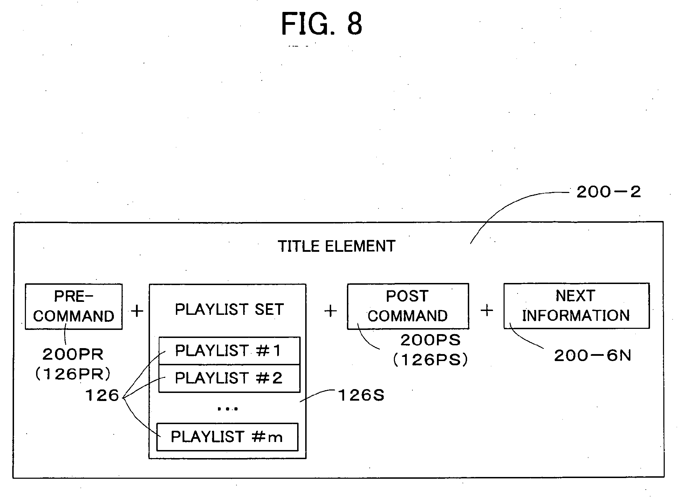

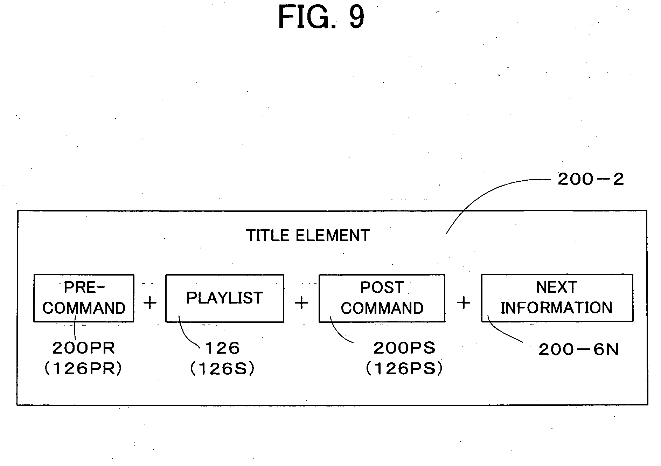

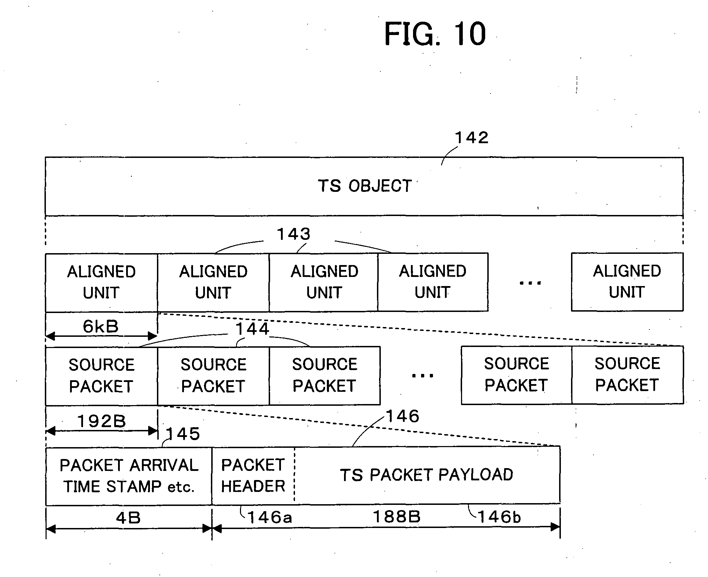

Next, with reference to FIG. 3 and FIG. 10, a structure of data to be recorded onto the optical disc 100 is discussed. FIG. 3 schematically illustrates the data structure to be recorded onto the optical disc 100. FIG. 4 schematically illustrates in detail the data structure in each object shown in FIG. 3. FIG. 5 and FIG. 6 schematically show a data structure in detail respectively in each playlist (P list) set shown in FIG. 3. FIGS. 7A and 7B schematically show detail of the data structure of each item shown in FIG. 6. FIG. 8 schematically shows a logic structure of data in each title element shown in FIG. 4. FIG. 9 schematically shows a logic structure of data in each title element shown in FIG. 4, in a case that each playlist set is composed of one playlist. FIG. 10 schematically shows a detail of a data structure in each object shown in FIG. 3.

In the following explanation, the "title" means a reproduction unit, on the basis of which a plurality of "playlists" is executed successively or sequentially, and which is a logically large grouped unit, such as one movie or one TV program. The "playlist set" means a bundle of "playlists". For example, it may be a bundle of playlists to reproduce a plurality of contents information having a special relationship switchable to each other in an angle reproduction or a parental reproduction, or may be a bundle of playlists to reproduce contents information relating to a plurality of programs broadcasted in the same time zone and collectively recorded. Alternatively, it may be a bundle of playlists to reproduce various contents information, in one title, prepared on the basis of required function, for example on the basis of video performance or audio performance required for the information reproduction system, such as a high vision compatibility, a display resolution, a surround speaker compatibility, a speaker layout and so on. The "playlist" is a file for storing the information required to reproduce the "object" and consists of a plurality of "items" each storing the information about a reproduction range of the object to access the object. The "object" is the entity information of contents constructing the aforementioned MPEG2 transport stream.

In FIG. 3, the optical disc 100 is provided with four files as a logical structure: a disc information file 110; a playlist (P list) information file 120; an object information file 130; and an object data file 140. The disc 100 is further provided with a file system 105 for managing these files. Incidentally, although FIG. 3 does not show directly the physical data arrangement on the optical disc 100, it is possible to perform the recording in such a manner that the arrangement shown in FIG. 3 corresponds to another arrangement shown in FIG. 1. That is, it is possible to record the file system 105 or the like in the data record area 106 following the lead-in area 104 and further record the object data file 140 or the like in the data record area 106. The file structure shown in FIG. 3 can be constructed, even without the lead-in area 104 or the lead-out area 108 shown in FIG. 1.

The disc information file 110 is a file for storing general information about the entire optical disc 100, and stores the disc general information 112, the title information table 114 and other information 118. The disc general information 112 may store the total numbers of titles or the like in the optical disc 100. The title information table 114 includes a title pointer 114-1 and a plurality of titles 200 (title #1 -#m) whose ID (identification) number or record address is indicated by the title pointer. In each title 200, each title type (e.g. sequential reproduction type, branch type and so on), or the playlist (P list) number constructing each title is stored for each title, as the logical information.

More specifically, for example, as shown in FIG. 4, each title 200 is made of a title general information 200-1, a plurality of title elements 200-2 and other information 200-5. Furthermore, each title element 200-2 is made of a pre-command 200PR, a pointer 200PT to a playlist set, a post command 200PS and other information 200-6.

The pointer 200PT as an example of the first pointer information according to the present invention indicates an ID number of the playlist set 126S stored in the playlist information file 120 corresponding to contents information to be reproduced on the basis of the title element 200-2 including the pointer 200PT. Incidentally, the pointer 200PT may be information to indicate a record position of the playlist set 126S corresponding to the contents information to be reproduced on the basis of the title element 200-2. The pre-command 200PR as an example of the first pre-command according to the present invention indicates a command to be executed before reproducing the contents information whose reproduction sequence is defined by one playlist set 126S designated by the pointer 200PT. The post command 200PS as an example of the first post command according to the present invention is a command to be executed after reproducing the contents information whose reproduction sequence is defined by said one playlist set. Other information 200-5 included in the title element 200-2 may include next information to designate a title element for a next reproduction after the present reproduction of the present title element, for example.

Therefore, when the information reproduction apparatus which will be described later reproduces the information record medium, the desired contents information can be reproduced as a title element 200-2, by making access to the playlist set 126S in accordance with the pointer 200PT and performing a control to select playlist corresponding to the desired program or the like from among a plurality of playlists 126 in the playlist set 126S. Furthermore, reproducing such a title element 200-2 solely or sequentially makes it possible to reproduce one title 200. Furthermore, it is possible to execute commands to be executed before reproduction, in the contents information whose reproduction sequence is defined by one playlist set 126S designated by the pointer 200PT, according to the pre-command 200PR. Furthermore, it is possible to execute commands to be executed after the reproduction, in the contents information whose reproduction sequence is defined by one playlist set 126S designated by the pointer 200PT, according to the post command 200PS. The post command 200PS may be a command to branch the contents information, a command to select a next title and so on. Additionally, it is possible to reproduce a next title element 200-2 to be reproduced after the presently reproduced title element 200-2, according to the "next information" included in other information 200-5.

Again in FIG. 3, the playlist information file 120 stores the playlist (P list) information table 121 indicating the logical structure of each playlist. This table 121 is divided into the playlist (P list) general information 122, the playlist (P list) set pointer 124, a plurality of playlist (P list) sets 126S (P list set #1-#n), and other information 128. In this playlist information table 121, the logical information of each playlist set 126S is stored in the order of the playlist set number. In other words, the order for storing the each playlist set 126S is the playlist set numbers. Furthermore, in the aforementioned title information table 114, the same playlist set 126S can be referred from a plurality of titles 200. That is, the playlist set #p in the playlist set information table 121 may be pointed on the title information table 114, even in the case that title #q and title #r use the same playlist set #p.

As shown in FIG. 5, the playlist set 126S includes playlist set general information 126-1, a plurality of playlists 126 (playlist #1-#x), an item definition table 126-3, and other information 126-4. Each playlist 126 includes a plurality of playlist elements 126-2 (playlist element #1-#y), and other information 126-5. Furthermore, each playlist element 126-2 includes a pre-command 126PR, a pointer 126PT to item, a post command 126PS and other information 126-6.

The pointer 126PT as an example of the second pointer information according to the present invention indicates an item identification number defined by the item definition table 126-3 corresponding to the contents information to be reproduced on the basis of the playlist element 126-2 including the pointer 126PT. Incidentally, the pointer 126PT may be an item record position defined by the item definition table 126-3.

As shown in FIG. 6, in the playlist set 126S, a plurality of items 204 is defined in the item definition table 126-3. They commonly belong to a plurality of playlists 126. Furthermore, as the playlist set general information 126-1, a name of each playlist 126 included in the playlist set 126S, UI (user interface information) such as a reproduction time, address information to each item definition table 126-3 and so on are recorded.

Again in FIG. 5, the pre-command 126PR as an example of the second pre-command according to the present invention indicates a command to be executed before reproduction of one item 204 designated by the pointer 126PT. The post command 126PS as an example of the secondpost command according to the present invention indicates a command to be executed after the reproduction of said one item 204. Other information 126-6 included in the playlist element 126-2 may include the next information to designate the playlist element 126-2 relating to the next reproduction of the reproduction of the playlist element 126-2.

As shown in FIGS. 7A and 7B, the item 204 is a minimum unit to be displayed. In the item 204, "in-point information" to indicate a start address of an obj ect and "out-point information" to indicate an end address of the object are recorded. Incidentally, each of these "in-point information" and "out-point information" may indicate the address directly or indirectly as a time period or time point on the reproduction time scale. In the figure, if a plurality of ES's (Elementary Streams) is multiplexed for the object designated by "stream object #m", designating the item 204 means designating a special ES or special combination of ES's.

As shown in FIGS. 7A and 7B, the item 204 is the minimum unit to be displayed. The item 204 includes an item 204 for reproducing a TS object and a still picture object item 204ST for reproducing the still picture object.

As shown in FIG. 8, the title element 200-2 logically consists of the pre-command 200PR or 126PR, the playlist set 126S selected by the pointer 200PT, the post command 200PS or 126PS, and the next information 200-6N. Therefore, a processing to select the playlist 126 from among the playlist set 126S is executed, according to any condition reproducible in a system, such as video resolution.

As shown in FIG. 9, however, if the playlist set designated by the pointer 200PT consists of only one playlist, i.e. if the playlist set 126S shown in FIG. 3 is replaced by a single playlist 126, the title element 200-2 may logically consist of the pre-command 200PR or 126PR, the playlist 126 to be reproduced during the reproduction operation, the post command 200PS or 126PS, and the next information 200-6N. In this case, once the playlist set is designated for the reproduction, the single playlist 126 is reproduced, regardless of the condition reproducible in the system.

Again in FIG. 3, in the object information file 130, the storage position (i.e. the logical address of the reproduction object) in the object data file 140 for each item constructed in each playlist 126, and/or various attribute information relating to the reproduction of the item are stored. Particularly in this embodiment, the object information file 130 stores the AU table 131 including a plurality of AU (Associate Unit) information 132I (AU #1-#q) as mentioned below, the ES (Elementary Stream) map table 134 and other information 138.

The object data file 140 stores a plurality of TS objects 142 (TS #1 object-TS #s object) for each transport stream (TS) and a plurality of still picture objects 142ST, i.e. entity data of contents to be actually reproduced.

Incidentally, four kinds of file discussed with reference to FIG. 3 can be further divided into a plurality of files respectively to be stored. All these files may be managed by the file system 105. For example, the object data file 140 can be divided into a plurality of files such as object data file #1, object data file #2 and so on.

As shown in FIG. 10, the TS object 142 shown in FIG. 3, as a logically reproducible unit, may be divided into a plurality of aligned units 143 each having 6kB of data amount. The head of the aligned units 143 is aligned with the head of the TS object 142. Each aligned unit 143 is further divided into a plurality of source packets 144 each having 192B of data amount. The source packet 144 is a physically reproducible unit, on the basis of which (i.e. packet by packet) at least the video data, the audio data and the sub-picture data from among the data on the optical disc 100 are multiplexed, and other information may be multiplexed in the same manner. Each source packet 144 includes the control information 145 having 4B of data amount to control the reproduction, such as the packet arrival time stamp or the like indicating the reproduction start time point of the TS (Transport Stream) packet on the reproduction time scale, and includes the TS packet 146 having 188B of data amount. The TS packet 146 has a packet header 146a and a TS packet payload 146b. In the TS packet payload 146b, the video data may be packetized as the "video packet", the audio data may be packetized as the "audio packet", or the sub-picture data may be packetized as the "sub-picture packet", otherwise other data may be packetized.

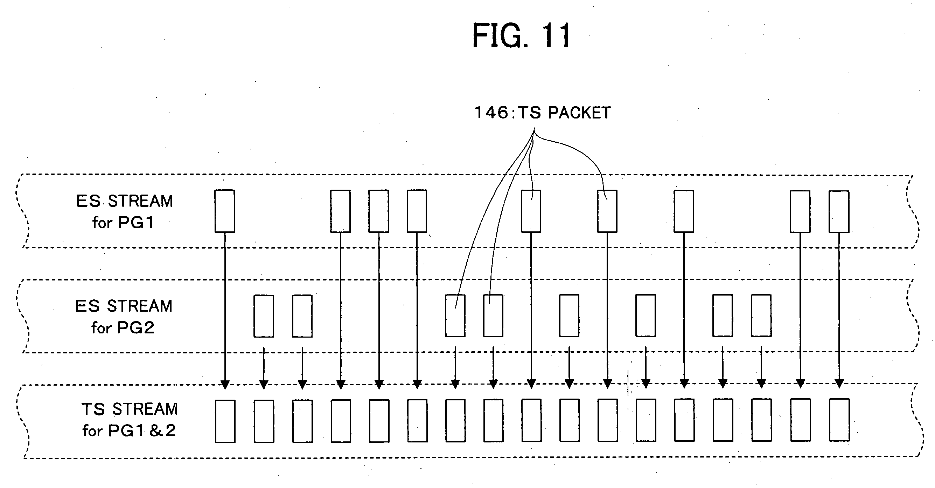

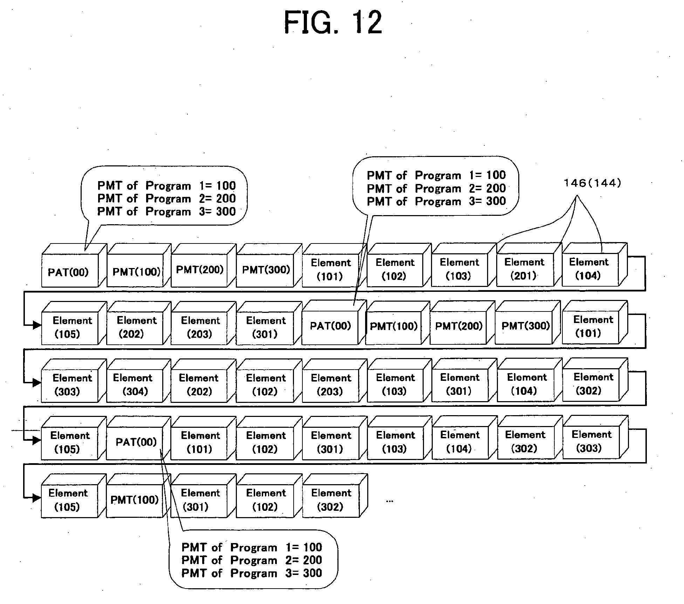

Next, with reference to FIG. 11 and FIG. 12, an explanation is made on the multi-recording of the video data, the audio data, the sub-picture data and the like in the transport stream format on the optical disc 100 as shown in FIG. 2B, by the TS packet 146 shown in FIG. 4. FIG. 11 conceptually illustrates that the elementary stream (ES) for program #1 (PG1) in the upper stage and the elementary stream (ES) for program #2 (PG2) in the middle stage are multiplexed, and the transport stream (TS) for these two programs (PG1&2) is formed, under an assumption that a horizontal axis is defined as a time axis. FIG. 12 conceptually illustrates an image of the TS packets multiplexed in one transport stream (TS), as a packet array along the time (sic).

As shown in FIG. 11, the elementary stream for program #1 (in the upper stage) may be formed by discretely arranging TS packets 146 obtained by packetizing the video data for program #1, along the time axis (horizontal axis). The elementary stream for program #2 (in the middle stage) may be formed by discretely arranging TS packets 146 obtained by packetizing the video data for program #2, along the time axis (horizontal axis). Then, these TS packets 146 are multiplexed so that the transport stream (in the lower stage) for two programs is made. Incidentally, omitted for convenience of explanation in FIG. 11, the elementary stream made of TS packets obtained by packetizing the audio data as the elementary stream for program #1, and/or the sub-picture stream made of TS packets obtained by packetizing the sub-picture data may be multiplexed similarly, as shown in FIG. 2B. In addition to this, the elementary stream made of TS packets obtained by packetizing the audio data, as the elementary stream for program #2, and the sub-picture stream made of TS packets obtained by packetizing the sub-picture data may be multiplexed similarly.

As shown in FIG. 12, in this embodiment, a plurality of TS packets 146 multiplexed as such forms one TS stream. Then, a plurality of TS packets 146 in the multiplexed form is multi-recorded onto the optical disc 100, with the information such as the packet arrival time stamp 145 and the like being added. Incidentally, in FIG. 12, the TS packet 146 consisting of the data forming program #i (i=1, 2, 3) is indicated by "element (i0j)", wherein, j (j=1, 2, ...) is a sequential number for each stream composing the program. This (i0j) is defined as a packet ID which is an identification number of the TS packet 146 for each elementary stream. This packet ID is fixed at an inherent value for a plurality of TS packets 146 to be multiplexed at the same time point, so that the plurality of TS packets 146 are distinguished from each other even if multiplexed at the same time point.

Furthermore, in FIG. 12, the PAT (Program Association Table) and the PMT (Program Map Table) are also packetized by the TS packet 146 unit and multiplexed. The PAT among them stores a table indicating a plurality of PMT packet ID's. Particularly, the PAT is defined by MPEG2 standard so that (000) is given as a predetermined packet ID, as shown in FIG. 12. That is, from among a plurality of packets multiplexed at the same time point, the TS packet 146 obtained by packetizing the PAT is detected, as the TS packet 146 whose packet ID is (000). The PMT stores a table indicating the packet ID for each elementary stream forming each program in one or more programs. Any packet ID can be given to the PMT, and their packet IDs are indicated by the PAT detectable with the packet ID (000) as mentioned above. Therefore, among a plurality of packets multiplexed at the same time point, the TS packets 146 obtained by packetizing the PMT (i.e. TS packets 146 to which packet IDs (100), (200) and (300) are given in FIG. 12) are detected on the basis of the PAT.

In the case that the transport stream as shown in FIG. 12 is transferred digitally, the tuner refers to the PAT and the PMT constructed as such and thereby extracts the multiplexed packets corresponding to the desired elementary stream and decodes the extracted packets.

In this embodiment, the packets of these PAT and PMT are included as the TS packets 146 to be stored in the TS object 142 shown in FIG. 10. That is, when the transport stream as shown in FIG. 12 is transferred, the transferred stream can be directly recorded onto the optical disc 100, which is a great advantage.

Furthermore in this embodiment, these PAT and PMT recorded as such are not referred to when the optical disc 100 is reproduced. Instead, referring to the AU table 131 and the ES map table 134, shown in FIG. 3 and mentioned in detail later, makes it possible to perform the reproduction effectively and apply to the complicated multi-vision reproduction or the like. For this, in this embodiment, a relationship between packets and the elementary stream obtained by referring to the PAT and the PMT on decoding or recording for example is stored in the object information file 130, in a formof AU table 131 and ES map table 134, without packetizing or multiplexing.

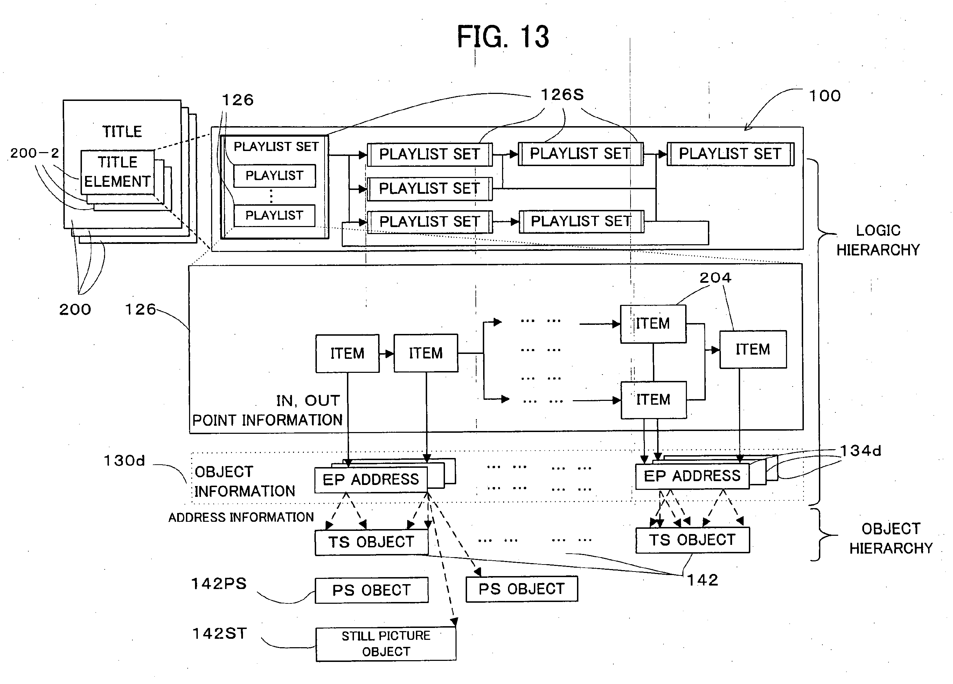

Next, with reference to FIG. 13, the logical structure of data on the optical disc 100 is discussed. FIG. 13 schematically illustrates the logical structure of data on the optical disc 100, focusing on the development from the logic hierarchy to the object hierarchy or the entity hierarchy.

In FIG. 13, one or more titles 200 that are a logical large unit such as one movie or one TV program are recorded onto the optical disc 100. Each title 200 includes one or more title elements 200-2. Each title element 200-2 logically consists of a plurality of playlist sets 126S. In each title element 200-2, the plurality of playlist sets 126S may have a sequential structure or may have a branch structure.

Incidentally, in the case of a simple logical structure, one title element 200-2 consists of one playlist set 126S. Furthermore, one playlist set 126S consists of one playlist 126. On the other hand, it is possible to refer to one playlist set 126S by a plurality of title elements 200-2 or a plurality of titles 200.

Each playlist 126 is logically made of a plurality of items (playitems) 204. In each playlist 126, a plurality of items 204 may have the sequential structure or may have the branch structure. On the other hand, it is possible to refer to one item 204 by a plurality of playlists 126. The aforementioned in-point information and out-point information recorded on/in the item 204 logically designates the reproduction range of the TS object 142. Then, the object information 130d of the logically designated reproduction range is referred to and thereby the reproduction range of the TS object 142 is physically designated, via the file systemfinally. Here, the object information 130d includes various information to reproduce the TS object 142, such as the attribute information of the TS object 142, the ES address information 134d and the like required for the data search in the TS object 142 (incidentally, the ES map table 134 shown in FIG. 3 includes a plurality of ES address information 134d).

Then, when the information record reproduction apparatus reproduces the TS object 142 as mentioned below, a physical address to be reproduced in the TS object 142 is obtained from the item 204 and the object information 130d so that a desired elementary stream is reproduced. Also, when the information record reproduction apparatus reproduces the still picture object 142 ST, a physical address to be reproduced in the still picture object 142ST is obtained from the still picture object item 204ST and the object information 130d so that a desired still picture is reproduced.

Thus, in this embodiment, the in-point information and out-point information recorded on/in the item 204, as well as the ES address information 134d recorded in the ES map table 134 (see FIG. 3) of the object information 130d make it possible to perform the association from the logic hierarchy to the object hierarchy in the reproduction sequence so that the elementary stream is reproduced.

As discussed above, in this embodiment, units of the TS packet 146 are multiplexed and recorded on the optical disc 100. Thereby, the transport stream including a plurality of elementary streams as shown in FIG. 2B can be multiplexed and recorded onto the optical disc 100. In this embodiment, in the case that digital broadcasting is recorded onto the optical disc 100, a plurality of programs can be recorded at the same time, within the restriction of the record rate. Nevertheless, a record method is employed herein, in which a plurality of programs is multiplexed and recorded for one TS object 142. Now, an explanation is made on an embodiment of the information record reproduction apparatus capable of performing such a record processing.

### [Information record reproduction apparatus]

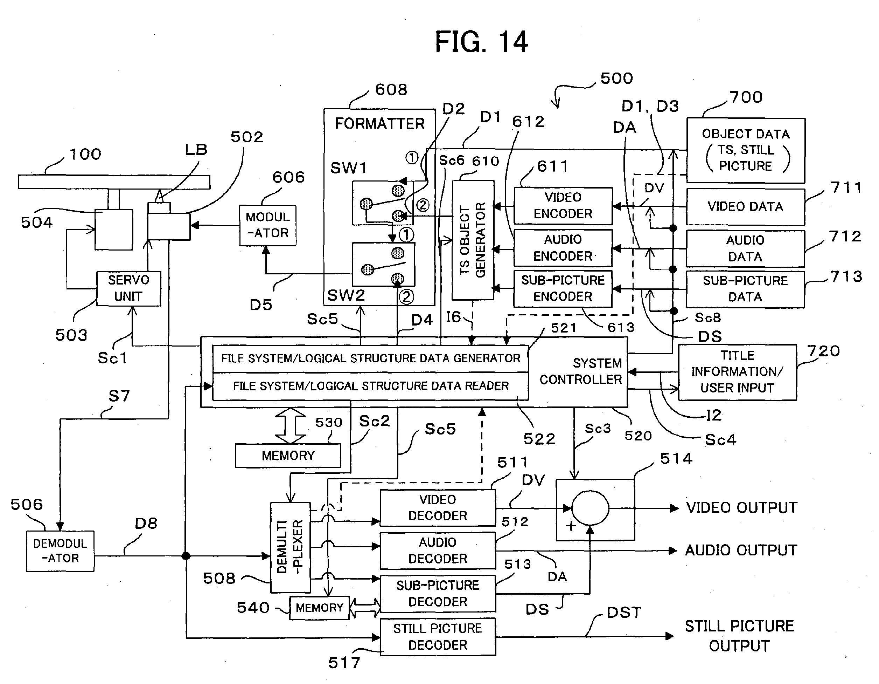

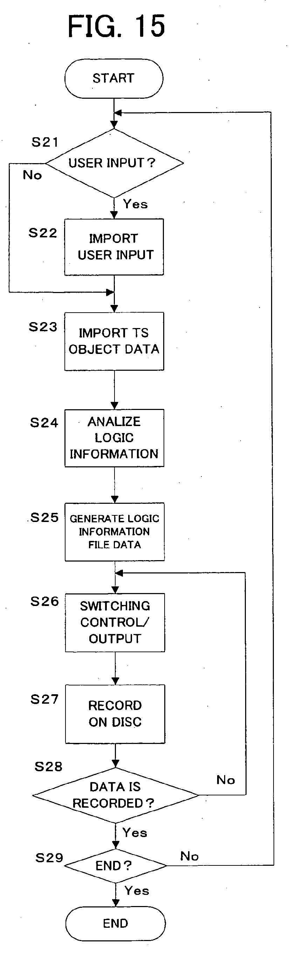

Next, with reference to FIG. 14 to FIG. 19, an embodiment of the information record reproduction apparatus of the present invention is discussed. Here, FIG. 14 is a block diagram of the information record reproduction apparatus, and FIGS. 15 to 19 illustrate the operational flow.

In FIG. 14, an information record reproduction apparatus 500 is roughly divided into a reproduction system and a record system. The apparatus 500 is constructed to record the information onto the optical disc 100 mentioned above and reproduce the information recorded thereon/therein. In this embodiment, the information record reproduction apparatus 500 is thus for recording and reproduction. Nevertheless, an embodiment of the information record apparatus according to the present invention can be constructed basically with the record system of the apparatus 500 and an embodiment of the information reproduction apparatus according to the present invention can be constructed basically with the reproduction system of the apparatus 500.

The information record reproduction apparatus 500 is provided with: an optical pickup 502; a servo unit 503; a spindle motor 504; a decoder 506; a demultiplexer 508; a video decoder 511; an audio decoder 512; a sub-picture decoder 513; a still picture decoder 517; an adder 514; a system controller 520; a memory 530; a memory 540; a modulator 606; a formatter 608; a TS object generator 610; a video encoder 611; an audio encoder 612; and a sub-picture encoder 613. The system controller 520 includes a file system/logical structure data generator 521 and a file system/logical structure data reader 522. Furthermore, the memory 530 and a user interface 720 to give a user input such as title information are connected to the system controller 520.

Among these constitutional elements, the decoder 506, the demultiplexer 508, the video decoder 511, the audio decoder 512, the sub-picture decoder 513, the still picture decoder 517, the still picture decoder 514 and the memory 540 mainly construct the reproduction system. On the other hand,among these constitutional elements, the modulator 606, the formatter 608, the TS object generator 610, the video encoder 611, the audio encoder 612 and the sub-picture encoder 613 mainly constructs the record system. The optical pickup 502, the servo unit 503, the spindle motor 504, the system controller 520, the memory 530 and the user interface 720 to give the user input such as title information are generally shared for both the reproduction system and the record system. Furthermore, for the record system, a TS object data source 700; a video data source 711; an audio data source 712; and a sub-picture data source 7 13 are prepared. Furthermore, the file system/logical structure data generator 521 disposed in the system controller 520 is used mainly in the record system, and the file system/logical structure reader 522 is used mainly in the reproduction system.

The optical pickup 502 irradiates the optical disc 100 with a light beam LB such as a laser beam, at the first power as reading light for the reproduction, and at the second power with the light beam LB modified as writing light for recording. The servo unit 503 performs the focus servo, the tracking servo and the like for the optical pickup 502, as well as the spindle servo for the spindle motor 504, under control of the control signal Sc1 outputted from the system controller 520, during the reproduction and recording. The spindle motor 504 is controlled under the spindle servo by the servo unit 503, for rotating the optical disc 100 at a predetermined speed.

### (i) Structure and Operation of Record System

Next, with reference to FIG. 14 to FIG. 18, a specific structure and the operation of each constitutional element constructing the record system of the information record reproduction apparatus 500 are explained in each case.

### (i-1) In the case that the already generated object or the still picture object is used.

This case is discussed, with reference to FIG. 14 and FIG. 15.

In FIG. 14, the TS object data source 700 may be made of the memory storage such as a video tape, a memory, for storing the TS or still picture object data D1.

Firstly in FIG. 15, each title information (e.g. playlist contents etc.) to be logically constructed on the optical disc 100 using the TS object data D1 is inputted into the system controller 520, as the user input I2 such as the title information, via the user interface 720. Then, the system controller 520 imports the user input I2 such as the title information via the user interface 720 (step S21: Yes, and step S22). In this case, the user interface 720, under control of the control signal Sc4 from the system controller 520, can perform the input operation in response to the contents to be recorded, such as the selection via the title menu screen. Incidentally, if the user input is already performed (step S21: No), these processings are omitted.

Next, the TS object data source 700 outputs the TS object data D1, under control of the control signal Sc8 to indicate the data reading from the system controller 520. Then, the system controller 520 imports the TS object data D1 from the TS object data source 700 (step S23), and performs the data array analysis (e.g. a record data length and the like) of the TS object data D1, the analysis of each elementary stream structure (e.g. understanding of ES_PID (elementary stream/packet identification number)), on the basis of the PAT, the PMT and the like packetized with the video data as mentioned above, due to the TS analysis feature in the file system/logical structure data generator 521 (step S24).

Next, the system controller 520 makes the file system/logical structure data generator 521 generate the disc information file 110, the playlist information file 120, the object information file 130 and the file system 105 (see FIG. 3), as the logical information file data D4, on the basis of the analysis result of each elementary stream and the TS object data D1 data array, as well as the user input I2 such as the imported title information (step S25). The memory 530 is used to generate this logical information file data D4.

Incidentally, variations in which the data about each elementary stream structure information and the TS object data D1 data array may be prepared in advance are naturally understood or suggested, all of which are encompassed within a scope of the embodiment.

In FIG. 14, the formatter 608 is for formatting the data array to store both the TS obj ect data D1 and the logical information file data D4 on the optical disc 100. More specifically, the formatter 608 is provided with a switch Sw1 and a switch Sw2 and is switching-controlled by a switch control signal Sc5 from the system controller 520. When formatting the TS object data D1, it connects the switch Sw1 to a ① side and the switch Sw2 to the ① side so as to output the TS object data D1 from the TS object data source 700. Incidentally, the transmission control of the TS object data D1 is performed by the control signal Sc8 from the system controller 520. On the other hand, when formatting the logical information file data D4, the formatter 608 is switching-controlled by the switch control signal Sc5 from the system controller 520, and connects the switch Sw2 to a ② side so as to output the logical information file data D4.

At step S26 in FIG. 15, (i) the logical information file data D4 from the file system / logical structure data generator 521 at the step S25 or (ii) the TS object data D1 from the TS object data source 700 is outputted through the formatter 608, under the switching-control by the formatter 608 as constructed above (step S26).

The selection output from the formatter 608 is transmitted to the modulator 606 as disc image data D5, and modulated by the modulator 606, and recorded onto the optical disc 100 through the optical pickup 502 (step S27). The system controller 520 also executes the disc record control in this case.

Then, if both the logical information file data D4 generated at the step S25 and the corresponding TS object data D1 have not been completely recorded yet, the operational flow returns to the step S26 to continue the recording (step S28: No). Incidentally, there is no preference in the record sequence of the logical information file data D4 and the corresponding TS object data D1.

On the other hand, if the both have been already recorded, it is judged whether or not the recording onto the optical disc 100 is to be ended, on the basis of the presence or absence of an end command (step S29). If it is not to be ended (step S29: No), the operational flow returns to the step S21 to continue the recording. On the other hand, if it is to be ended (step S29: Yes), a series of record processing ends.

As described above, the information record reproduction apparatus 500 performs the record processing in the case of using the already prepared TS object or the still picture object.

Incidentally, the example in FIG. 15 shows that the logical information file data D4 and the corresponding TS object data D1 are outputted at the step S26, after preparing the logical information file data D4 at the step S25. However, it is also possible to output the object data D1 and/or record the object data D1 onto the optical disc 100 before the step S25, so that the logical information file data D4 is generated and/or recorded after or in parallel with this recording.

### (i-2) The case of receiving and recording the transport stream on air

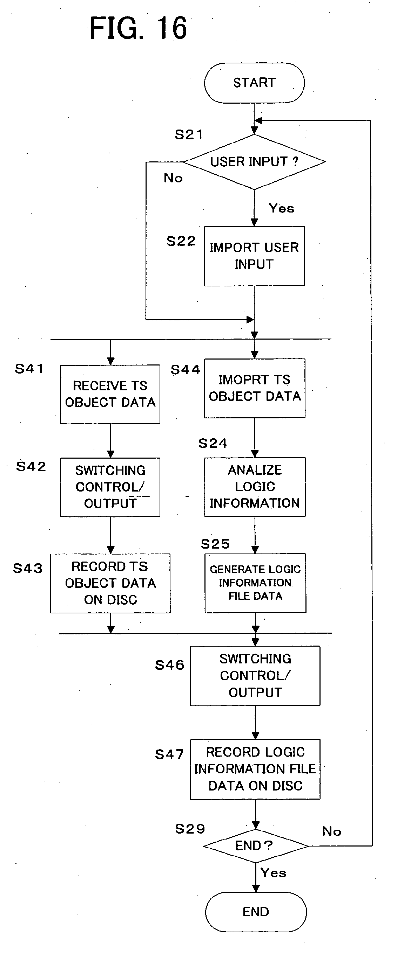

This case is explained with reference to FIG. 14 and FIG. 16. Incidentally, in FIG. 16, the same steps as those in FIG. 15 have the same step reference numbers, and their explanation is omitted as occasion demands.

Again, in this case, the similar processing is performed, as is "the case of using the already prepared TS object" described above. Therefore, the following explanation is focused on the differences from this case.

In the case of receiving and recording the transport stream on air, the TS object data source 700 is provided with a receiver (set top box) for receiving the digital broadcast on air, for example, receives the TS object data D1, and transmits it to the formatter 608 in real time (step S41). At the same time, reception information D3 (i. e. information corresponding to the data transmitted through the receiver and the interface of the system controller 520) including the program construction information and the belowmentioned ES_PID information, which are deciphered upon receiving, is imported into the system controller 520 and is stored into the memory 530 (step S44).

In the meantime, the TS object data D1 outputted to the formatter 608 is outputted to the modulator 606 under the switching-control by the formatter 608 (step S42), and is recorded onto the optical disc 100 (step S43).

Along with these operations,using the program construction information and the ES_PID information included in the reception information D3 imported upon receiving and stored in the memory 530, the file system / logical structure data generator 521 prepares the logical information file data D4 (step S24 and step S25). Then, after the completion of recording a series of the TS object data D1, this logical information file data D4 is additionally recorded onto the optical disc 100 (step S46 and step S47). Incidentally, these steps S24 and S25 may be performed after the step S43.

Moreover, as the occasion demands (e.g. in the case of editing one portion of the title, or the like), by adding the user input I2 of the title information and the like from the user interface 720 to the program construction information and the ES_PID information stored in the memory 530, it is possible to prepare the logical information file data D4 by the system controller 520 and additionally record this onto the optical disc 100.

As described above, the information record reproduction apparatus 500 performs the record processing in the case of receiving the transport stream on air and recording it in real time.

Incidentally, if all the reception data obtained when broadcasting is once stored into an archive apparatus, and then, if this is used as the object source 700, the same processing as that in "the case of using the already prepared TS object" will do.

### (i-3) The case of recording the video data, the audio data and the sub-picture data

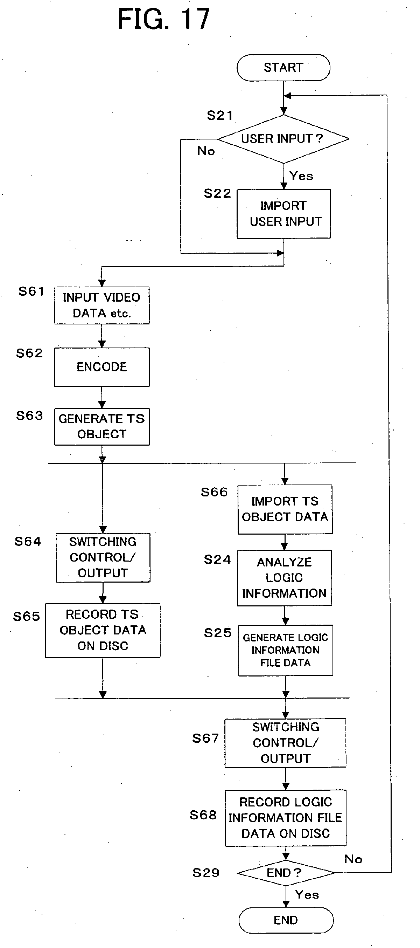

This case is explained with reference to FIG. 14 and FIG. 17. Incidentally, in FIG. 17, the same steps as those in FIG. 15 have the same step reference numbers, and their explanation is omitted as occasion demands.

In the case of recording the video data, the audio data, and the sub-picture data, which are individually prepared in advance, the video data source 711, the audio data source 712, and the sub-picture data source 713 are individually provided with the memory storage, such as a video tape and a memory, and store a video data DV, an audio data DA, and a sub-picture data DS, respectively.

These data sources are controlled by the control signal Sc8 giving an instruction for reading out the data from the system controller 520, and they transmit the video data DV, the audio data DA, and the sub-picture data DS, to the video encoder 611, the audio encoder 612, and the sub-picture encoder 613, respectively (step S61). Then, the video encoder 611, the audio encoder 612, and the sub-picture encoder 613 execute a predetermined type of encode processing (step S62).

The TS object generator 610 is controlled by a control signal Sc6 from the system controller 520 and converts the data encoded in this manner to the TS object data constituting the transport stream (step S63). In this case, the data array information of each TS object data (e.g. a record data length and the like) and the construction information of each elementary stream (e.g. the ES_PID, as described later, and the like) are transmitted as information I6 from the TS object generator 610 to the system controller 520 and are stored into the memory 530 (step S66).

On the other hand, the TS object data generated by the TS object generator 610 is transmitted to the ② side of the switch Sw1 of the formatter 608. Namely, when formatting the TS object data from the TS object generator 610, the formatter 608 is switching-controlled by the switch control signal Sc5 from the system controller 520 to shift the switch Sw1 to the ② side and the switch Sw2 to the ① side, thereby outputting the TS object data (step S64). Then, this TS object data is recorded onto the optical disc 100 through the modulator 606 (step S65).

Along with these operations, using the data array information of each TS object data and the construction information of each elementary stream imported as the information I6 into the memory 530, the file system / logical structure data generator 521 prepares the logical information file data D4 (step S24 and step S25). Then, after the completion of recording a series of the TS object data D2, the logical information file data D4 is additionally recorded onto the optical disc 100 (step S67 and step S68). Incidentally, the step S24 and the step S25 may be processed after the step S65.

Moreover, as the occasion demands (e.g. in the case of editing one portion of the title), by adding the user input I2 such as the title information and the like from the user interface 720 to these information stored in the memory 530, it is possible to prepare the logical information file data D4 by the file system / logical structure generator 521 and additionally record this onto the optical disc 100.

As described above, the information record reproduction apparatus 500 performs the record processing in the case of recording the video data, the audio data, and the sub-picture data, which are individually prepared in advance.

Incidentally, this record processing is applicable even when recording an arbitrary content the user has.

### (i-4) The case of recording the data by authoring

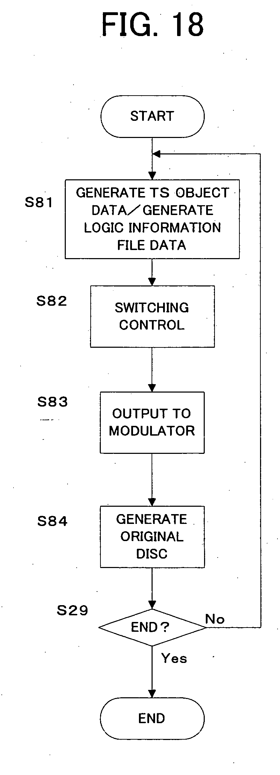

This case is explained with reference to FIG. 14 and FIG. 18. Incidentally, in FIG. 18, the same steps as those in FIG. 15 have the same step reference numbers, and their explanation is omitted as occasion demands.

In this case, by combining the above described three types of record processing in the three cases, an authoring system generates the TS object, the logical information file data, and the like in advance (step S81), and then completes the processing until switching-control performed at the formatter 608 (step S82). Then, the information obtained by this operation is transmitted, as the disc image data D5, to the modulator 606 equipped in front of and/or behind an original disc cutting machine (step S83), and this cutting machine prepares the original disc (step S84).

Particularly in the present embodiment, in the above-mentioned (i) Structure and Operation of Record System, information from the start of the recording to the end of the recording is recorded logically as one title 200, and the plural playlist sets 126S including the plural playlists 126 respectively are recorded for the plural contents information. In addition, each TS object in the object data file 120 is recorded by the unit of a "switch unit" for angle-switching at the time of reproduction, as will be explained later. Thus, as will be explained next, at the time of the reproduction of the information record reproduction medium, by executing a control of selecting playlists corresponding to the desired program, the desired angle block and the like from the plural playlists 126 included in each playlist set 126S, the desired contents information can be reproduced as the title. Additionally, during the reproduction, in response to the input of the instruction of the angle-switching, the angle-switching can be seamlessly performed on each border of the switch unit.

Particularly in this embodiment, (i) with regard to the structure and operation of the record system mentioned above, for example in the case of a DVD-ROM application (i.e. in the case of (i-4)), the contents information composing a plurality of blocks, such as a plurality of parental blocks or angle blocks is recorded as the transport streams and the like. On the other hand, for example in the case of a DVD recorder application (i.e. in the case of (i-2)), the contents information composing a plurality of programs streamed into the same transfer wave or the same transfer signal is recorded as the transport stream or the like. Alternatively, various contents information about the same title, which are prepared for each function demand such as a video reproduction function demand (video performance) or an audio reproduction function demand (audio performance) required for the information reproduction system, are recorded as the transport streams or the like, such as a pair of the high-vision compatible contents information and the normal video compatible contents information, a pair of the surround speaker compatible contents information and the monaural compatible contents information. Then, in such a recording, from the start of the recording to the end of the recording is recorded logically as one title 200, and a plurality of playlist sets 126S each including a plurality of playlists 126 is recorded for the plurality of contents information. Thus, as will be explained next, at the time of the reproduction of the information record reproduction medium, by executing the control of selecting the playlists 126 corresponding to the desired program, the desired parental block, the desired angle block and the like from plural playlists 126 included in each playlist set 126S, the desired contents information can be reproduced as the title.

### (ii) Structure and Operation in Reproduction System

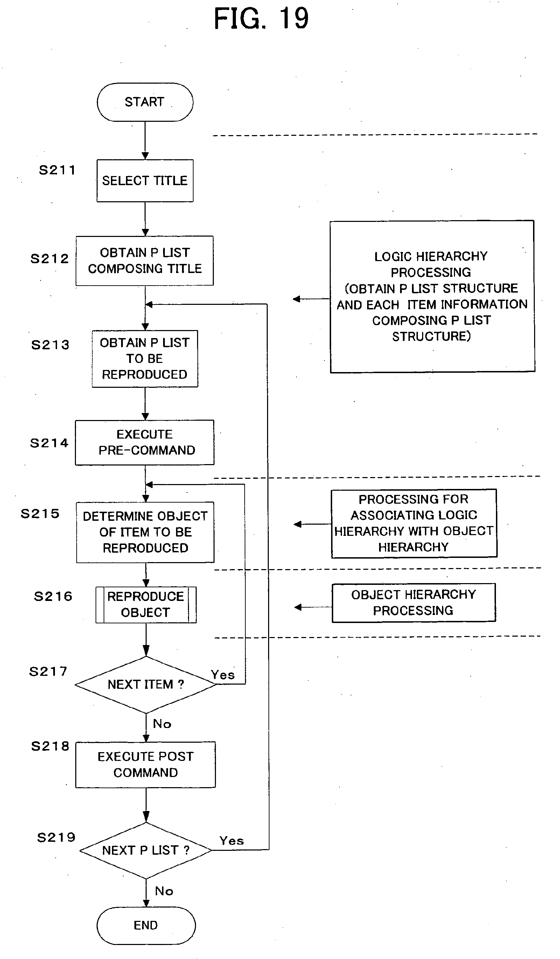

Next, the specific structure and operation of each constitutional element constituting the reproduction system of the information record reproduction apparatus 500 is explained with reference to FIG. 14 and FIG. 19.

In FIG. 14, via the user interface 720, the title to be reproduced from the optical disc 100, its reproduction condition and the like are inputted to the system controller 520, as the user input I2 such as the title information and the like. In this case, under control of the control signal Sc4 from the system controller 520, the input processing suitable for the content to be reproduced, such as a selection on a title menu screen, can be achieved by the user interface 720.

Responding to this, the system controller 520 controls the disc reproduction with respect to the optical disc 100, and the optical pickup 502 transmits a reading signal S7 to the demodulator 506.

The demodulator 506 demodulates a recorded signal recorded onto the optical disc 100 from this reading signal S7, and outputs it as demodulated data D8. The logical information file data (i.e. the file system 105, the disc information file 110, the P list information file 120, and the object information file 130, shown in FIG. 3) included in this demodulated data D8 as being a not-multiplexed information part is supplied to the system controller 520. On the basis of this logical information file data, the system controller 520 executes various reproduction control, such as processing of determining a reproduction address and controlling the optical pickup 502.

On the other hand, the demultiplexer 508 is controlled by the control signal Sc2 from the system controller 520, and demultiplexes the TS object data, included in the demodulated data D8, serving as the-multiplexed information portion. The control signal Sc2 is transmitted so that the demultiplexing is started after the completion of the access to the reproduction position address under the reproduction control by the system controller 520.

The video packet, the audio packet and the sub-picture packet are transmitted respectively from the demultiplexer 508 and supplied respectively to the video decoder 511, the audio decoder 512 and the sub-picture decoder 513. Then, the video data DV, the audio data DA and the sub-picture data DS are decoded, respectively.

Incidentally, although the packets obtained by packetizing the PAT or the PMT, included in the transport stream shown in FIG. 6, are included as a part of the demodulated data D8, respectively, they are discarded or abandoned at the demultiplexer 508.

The adder 514 is controlled by a control signal Sc3 giving an instruction of the mixing from the system controller 520, and mixes or superimposes in a predetermined timing the video data DV and the sub-picture data DS, which are respectively decoded at the video decoder 511 and the sub-picture decoder 513. The result is outputted as a video output from the information record reproduction apparatus 500 to a TV monitor, for example.

On the other hand, the audio data DA decoded at the audio decoder 512 is outputted as an audio output from the information record reproduction apparatus 500 to an external speaker, for example.

The still picture object outputted from the demodulator 506 is transmitted to the still picture decoder 517, and the still picture is decoded and reproduced. The reproduction of the still picture object will be explained later.

Here, the specific example of a reproduction processing routine by the system controller 520 is explained with reference to a flow chart of FIG. 19.

In FIG. 19, it is assumed that as an initial condition, the recognition of the optical disc 100 in the reproduction system and the recognition of a volume structure and a file structure by the file system 105 (see FIG. 3) have been already completed by the system controller 520 and the file system / logical structure data reader 522 inside of the system controller 520. Here, an explanation is made on the operational flow after obtaining the total number of the total titles from the disc general information 112 in the disc information file 110 and then choosing or selecting one title 200 from among them.

Firstly, the selection of the title 200 is performed via the user interface 720 (step S211). Responding to this, the system controller 520 obtains the information about the reproduction sequence from a reading result of the file system / logical structure data reader 522. Incidentally, in the selection of the title 200, the desired title element(s) 200-2 (see FIG. 4) may be selected from among a whole title elements 200-2 composing the title 200, with the aid of an external input operation by the user with using a remote controller and the like, or one title element 200-2 may be selected automatically depending on a system parameter or the like adjusted for the information record reproduction apparatus 500.

Then, contents of a plurality of playlists 126 composing a playlist set 126S corresponding to the selected title 200 (title element 200-2) are obtained. Here, as a processing at a logic hierarchy, the information about the each playlist 126 structure and each item 204 composing each playlist (see FIG. 5, FIG. 6 and FIG. 13) is obtained (step S212).

Then, contents of the playlist 126 to be reproduced is obtained from among a plurality of playlists 126 obtained at step S212. For example, herein, the reproduction is started from a playlist #1, and the contents of the corresponding playlist 126 is obtained (step S213). The contents of the playlist 126 may be one or more playlist elements 126-2 (see FIG. 5), which are obtained by the obtaining processing at step S213.

Then, the pre-command 126PR (see FIG. 5) included in this playlist 126 is executed (step S214). Incidentally, it is possible for the pre-command 126PR to select one from among a plurality of playlists 126, which composes the playlist set 126S with a certain relationship of the plurality of playlists 126. If the playlist element 126-2 composing the playlist 126 does not have the pre-command 126PR, this processing is omitted.

Then, the TS object 142 (see FIG. 3 and FIG. 10) to be reproduced is determined (step S215), on the basis of the item 204 (see FIG. 5 to FIG. 7) identified by the playlist 126 obtained at step S213. More specifically, on the basis of the item 204, the object information file 130 (see FIG. 3) relating to the TS object 142 as the reproduction target is obtained and a stream number, address and the like of the TS object 142 to be reproduced are identified.

Incidentally, in this embodiment, also the belowmentioned AU (Association Unit) information 132I and PU (Presentation Unit) information 302I are obtained as the information stored in the object information file 130. On the basis of these information, the aforementioned logic hierarchy is associated with the object hierarchy (see FIG. 13).

Then, the reproduction of the TS object 142 determined at step S215 is actually started. That is, on the basis of the processing at the logic hierarchy, the processing at the object hierarchy is started (step S216).

During the reproduction of the TS object 142, it is judged whether or not the next item 204 composing the playlist 126 to be reproduced exists (step S217). Then, insofar as the next item 204 exists (step S217: Yes), the process goes back to the step S215 to repeat the aforementioned determination and the reproduction of the TS object 142.

On the other hand, at the judgment at step S217, if it is judged that the next item 204 does not exist (step S217: No), the post command 126PS (see FIG. 5) corresponding to the presently executed playlist 126 is executed (step S218). Incidentally, if the playlist element 126-2 composing the playlist 126 does not have the post command 126PS, this processing is omitted.

Then, it is judged whether or not the next playlist 126 composing the selected title 200 exists (step S219). If exists (step S219: Yes), the process goes back to the step S213 to repeat the processings following obtaining the playlist 126 to be reproduced.

On the other hand, at the judgment at step S219, if it is judged-that the next playlist 126 does not exist (step S219: No), i.e. if the all playlists 126 to be reproduced corresponding to the title 200 selected at step S211 are completely reproduced, a series of reproduction operations or processings is terminated.

As discussed above, the information record reproduction apparatus 500 in this embodiment reproduces the optical disc 100.

Particularly in this embodiment, in the processing of the logic hierarchy from step S211 to step S214 of FIG. 19 and the processing of associating the logic hierarchy with the object hierarchy at step S215, any one of a plurality of playlists 126 included in each playlist set 126S designated by the title 200 is selected as will be explained later, and the contents information is reproduced in the reproduction sequence defined by the selected playlist. For example, in the DVD recorder application or the DVD-ROM application, the desired contents information can be reproduced as the title 200, by selecting playlist(s) from among a plurality of playlist information included in each playlist set 126S recorded as one title, corresponding to the desired contents information, such as a desired program, a desired parental block, a desired angle block, a version actually reproducible in each information reproduction system in view of the functionality, a version capable of using fully or efficiently the functionality of each information reproduction system.

### [Method of Selecting Playlist in Playlist Set]

In the present embodiment, the playlist 126 corresponding to the desired contents information is suitably selected from the playlist set 126S included in the reproduced playlist information file 120.

The pre-command 200PR (see FIG. 4) included in the title element 200-2 has a playlist selection command group list in which a selection condition is written for each playlist 126. The selection of the playlist may be performed in accordance with the selection condition, for example. In addition, the selection of the playlist may be performed in accordance with the attribute information (e.g., information indicating an attribute of the contents information related to the playlist, such as a video resolution for a video function, distinction of progressive/interleave, a video codec, a number of audio channels, a audio codec and the like) added to each playlist 126 stored in the playlist set 126S. Alternatively, the selection may be performed in accordance with the playlist set control information, included in the title element 200-2, in which the selection condition is stored for each playlist. By such the selection, the playlist corresponding to the desired contents information such as the desired program, the desired parental block, the desired angle block and the like can be selected, for example. Also, the playlist reproducible by the information reproduction system and preferably capable of making the best use of the video reproduction function and a sound reproduction function of the information reproduction system can be selected, for example.

### [Still Picture Reproduction]

Next, the description will be given of the reproduction of the still picture in detail.

### (Still Picture Object)

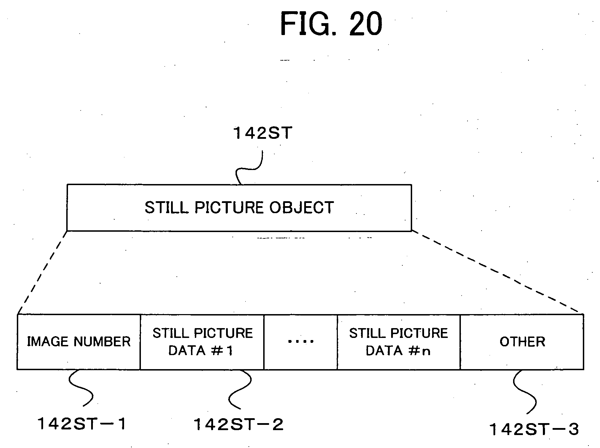

FIG. 20 shows a data structure of the still picture object. As shown in FIG. 3, the still picture object 142ST is included in the object data file 140. As shown in FIG. 20, the still picture object 142ST includes an image number 142ST-1, a plurality of still picture data 142ST-2 and other information 142ST-3. The image number 142ST-1 indicates a number of the still picture data 142ST-2 included in the still picture object 142ST, i.e., a number of still pictures. Each still picture data 142ST-2 may be data in a JPEG form for example, but is not limited to it.

### (Still Picture Item)

Next, the description will be given of the still picture item which is used at the time of reproducing the still picture. Onto the above-mentioned optical disc 100, the above-mentioned still picture object 142ST can be recorded. At the time of reproduction, according to the playlist constructed by the still picture item, the still picture object 142ST is reproduced. Thereby, the plural still pictures can be reproduced by various kinds of reproduction (presentation) method such as a slide show.

In the case of the still picture, the data structure relating to the playlist is basically similar to the above structure. Namely, as shown in FIG. 3, the plural playlist sets 126S are included in the playlist information file 120, and as shown in FIG. 5, the plural playlists 126 are included in the playlist set 126S. The plural items 204 are included in the playlist 126. As shown in FIGS. 7A and 7B, the item 204 can include the still picture object item 204ST in addition to the stream object item 204.

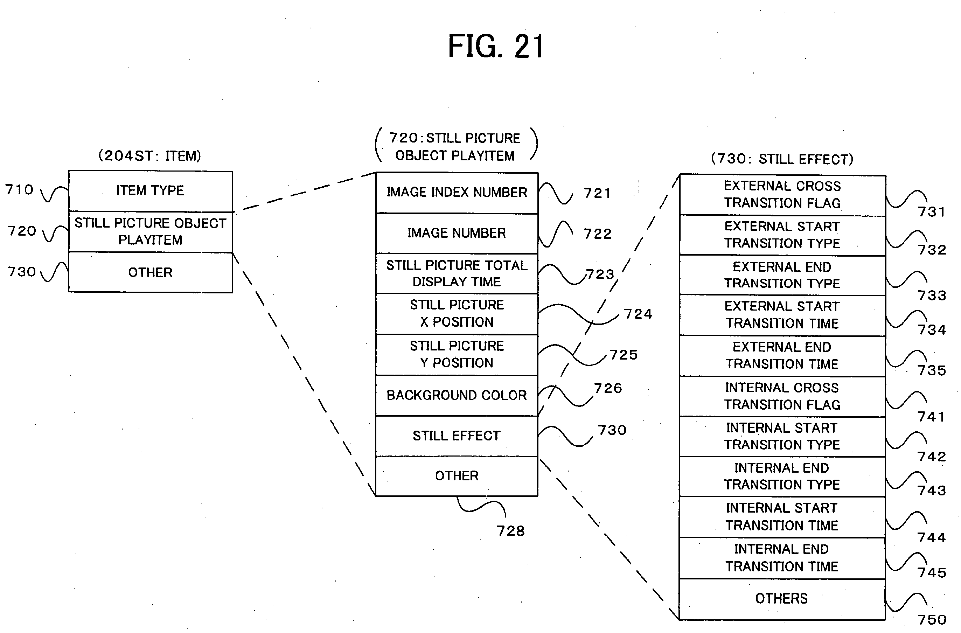

FIG. 21 shows a hierarchical structure of the still picture object item. In FIG. 21, the still picture item 204ST includes an item type 710, a still picture object playitem 720 and other data 730.

The item type 710 is information indicating whether the item is an item for a stream object item, an item for a still picture object or other playitem. The still picture playitem 204ST includes the information showing that it is the playitem for the still picture object as the item type 710. Therefore, whether the plural items on the optical disc 100 are the stream object items or the still picture object items is actually discriminated by referring to the item type 710.

When the item is for the still picture, the playitem 204ST includes the still picture object playitem 720. The still picture object playitem 720 basically includes various information showing a method of reproducing the still picture object. Concretely, as shown in FIG. 21, the still picture object playitem 720 includes an image index number 721, an image number 722, a still picture total display time (duration time) 723, a still picture X position 724, a still picture Y position 725, a background color 726, a still effect 730 and other information 728.

As an explanation of each information, first, the image index number 721 indicates an index number of the still picture included in the correspondent still picture object 142ST. The image number 722 indicates a number of still pictures included in the item 204ST. The still picture total display time 723 indicates a time width of reproducing (displaying) the still picture. The still picture total display time is prescribed to include a start transition time and an end transition time which will be described later.

The still picture X position 724 indicates a display position in the X direction of the correspondent still picture, and the still picture Y position 725 indicates a display position in the Y direction of the correspondent still picture. The background color 726 shows a color displayed on the background of the still picture. As the method of displaying the still picture object subjected to display, the plural still pictures can be switched in order to be displayed, like a slide show. In such the case, a monochromatic background image is normally displayed during switching the displays from the preceding still picture to the next still picture, and the background color shows the color of the background image. As the background color, red, blue, green and the like can be used, for example.

The still effect 730 is information about a method of displaying the still picture object, and mainly prescribes the transition effect at the time of switching the plural still pictures. Concretely, the still effect 730 includes an external cross transition flag 731, an external start transition type 732, an external end transition type 733, an external start transition time 734, an external end transition time 735, an internal cross transition flag 741, an internal start transition type 742, an internal end transition type 743, an internal start transition time 744, an internal end transition time 745 and other information 750. They will be explained below.

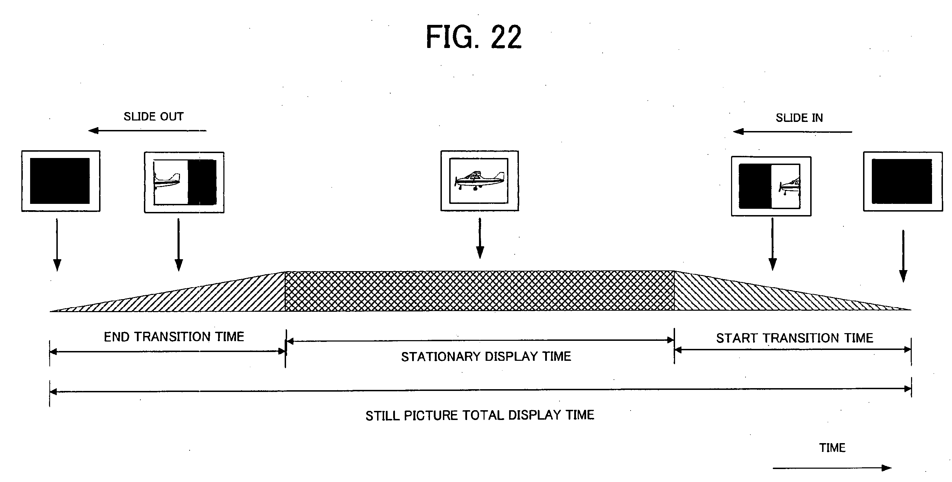

FIG. 22 schematically shows a situation in a case that one still picture presentation (display) is started by a slide-in technique and the presentation is ended by a slide-out technique. As shown in FIG. 22, the still picture is displayed by the slide-in from the state in which the background image is displayed, and the display is changed to the state of displaying the background image again by the slide-out. Like this, the time period from the start to the end of the presentation of one still picture object is indicated by the still picture total display time. When one still picture is displayed, a time period from the start of the display until the completion of the display of the one still picture is called "start transition", and a time period from the state that the one still picture is displayed until the state that the display is ended is called "end transition". In addition, a time period required for the start transition is called "start transition time", and a time period required for the end transition is called "end transition time".

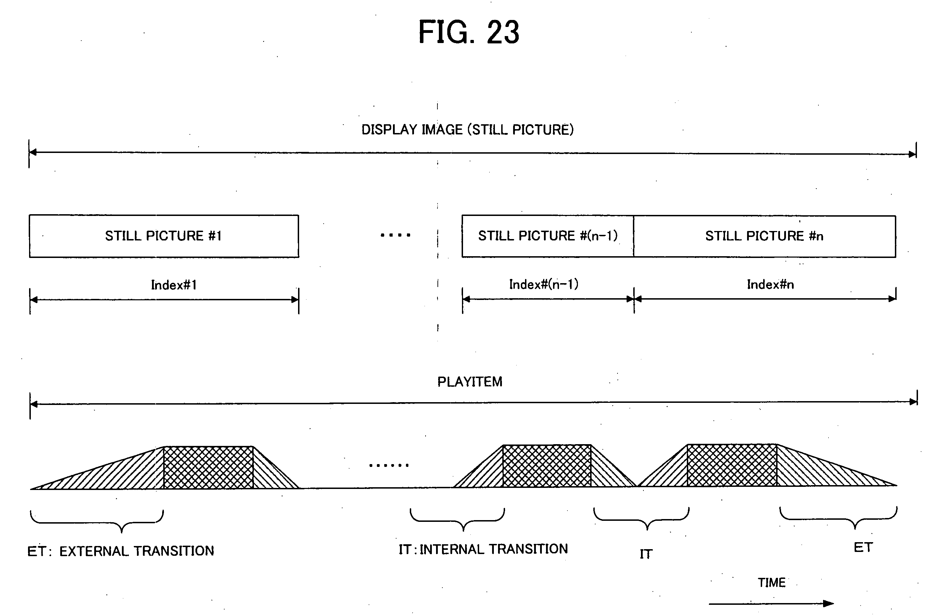

FIG. 23 schematically shows such a situation that the plural still pictures (#1 to #n) are displayed in order by one still picture item. It is noted that each still picture is displayed by the techniques of the slide-in and the slide-out shown in FIG. 22. When the plural still pictures are displayed in order, a transition (switch) period thereof is called "transition". As shown in FIG. 23, transitions between the plural still pictures defined by one item is called "internal transitions" IT, and transitions at the head and end of one item are called "external transitions" ET.

As described above, in the information in the still effect 730 shown in FIG. 21, the external start transition type 732 indicates the kind of the start transition of the still picture at the head of the plural still pictures defined by one item, and the external start transition time 734 indicates a period thereof (time width). As the kind of transitions, not only the slide technique (slide-in and slide out) shown in FIG. 22, but also a wipe, a dissolve or the like can be defined. This is similarly true of the other transition type. The external end transition type 733 indicates the kind of the end transition of the last still picture in the plural still pictures defined by one item, and the external end transition time 735 indicates a period thereof.

Similarly, the internal start transition type 742 indicates the kind of transition on the starting side for the transitions between the plural still pictures defined by one item, and the internal start transition time 744 indicates a period thereof (see FIG. 22). The internal end transition type 743 indicates the kind of transition on the ending side for the transitions between the plural still pictures defined by one item, and the internal end transition time 745 indicates a period thereof (see FIG. 22).

Therefore, when the plural still pictures are displayed in order by one item, the start of displaying the head still picture is performed for the period (time width) defined in the external start transition time 734 in accordance with the external start transition type 732. Displaying each of the plural subsequent still pictures in the item is completed in the internal end transition time 743 in accordance with the internal end transition type 741, and starts in the internal start transition time 744 in accordance with the internal start transition type 742. This process is repeated for the plural still pictures defined by one item. At the time of the end of displaying the last still picture in the plural still pictures defined by the item, the display ends in the period of the external end transition time 735 by the method defined in the external end transition type 733.

As described above, as for the transition of the plural still pictures defined by one item, the type and the period of the start transition of the head still picture of the item, the type and the period of the end transition of the end still picture of the item, the type and the time of the start transition of each of the plural still pictures defined by the item, and the type and the time of the end transition of each of the plural still pictures defined by the playitem can individually be defined, respectively. However, the type and the time of the internal start transition of the plural still pictures included in one item have to be the same. Specifically, different settings are impossible, e.g., it cannot be set that the start transition of the second still picture is m seconds by the wipe and the start transition of the third still picture is n seconds by the slide (n≠m). In addition, this is similarly true of the plural internal end transitions included in one item. Therefore, as for all the still pictures which are not at the head or end of one item, the start transition is executed by the same transition type (e.g., slide) and in the same period, and the end transition is executed by the same transition type (e.g., wipe) and in the same period.

Next, the cross transition will be explained. The cross transition is one manner of the above-mentioned transitions, and in the transition from the preceding still picture to the next still picture, the end transition of the preceding still picture and-the start transition of the next still picture are executed simultaneously.

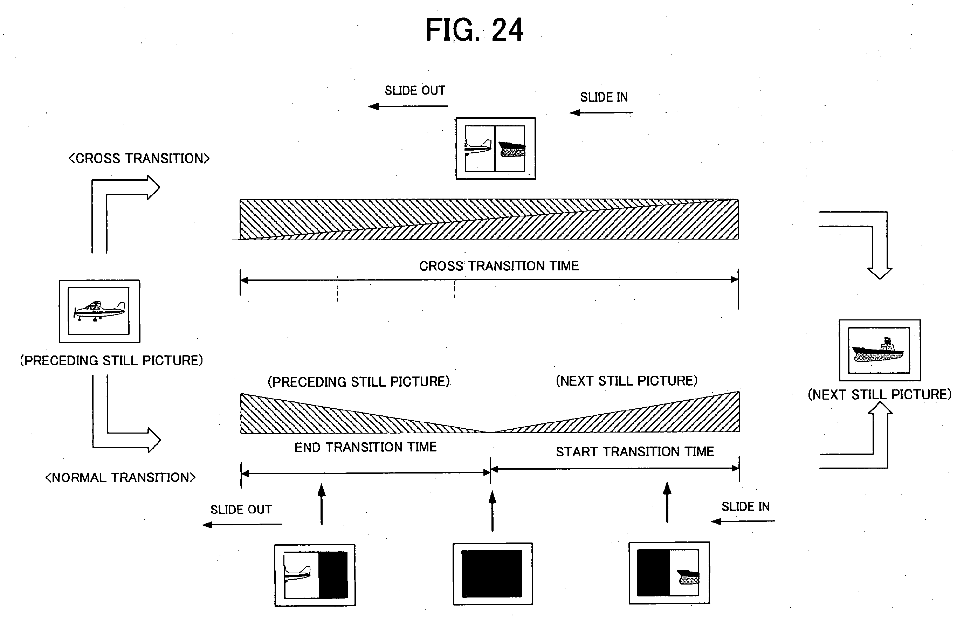

FIG. 24 schematically shows the cross transition. In FIG. 24, as the transition of two still pictures successively displayed (it is assumed that the preceding still picture is an image of plane and the subsequent still picture is an image of ship), there are a normal transition and the cross transition. The normal transition is the transition explained above, and is basically such the method that the end transition of the preceding still picture is completed and subsequently the start transition of the next still picture is executed. Namely, as shown at a lower portion in FIG. 24, after the display of the preceding still picture (the image of plane) is completely ended and a background image is displayed for a moment, the display of the next still picture (the image of ship) is started.

On the other hand, the cross transition is a method of executing the end transition of the preceding still picture and the start transition of the next still picture in parallel at the same time. Therefore, as shown at an upper portion of FIG. 24, while the preceding picture (the image of plane) is gradually slid out toward the left direction of a screen, the next picture (the image of ship) is slid in from the right direction of the screen. Thus, unlikely the case of the normal transition, the background image is never displayed during the transition.

The external cross transition flag 731 and the internal cross transition flag 741 in the still effect 730 shown in FIG. 21 indicate whether or not the above-mentioned cross transition is executed in the transition between the two still pictures. For example, the cross transition is executed when the flag is set to "1" and the normal transition is executed when the flag is set to "0". Additionally, when the external cross transition flag 731 is set to "1", in the transition between the end still picture of the item and the head still picture of the next playitem, the crosstransitionisexecuted. Furthermore, when the internal cross transition flag is set to "1", in all the transitions between the plural still pictures defined by the playitem, the cross transition is executed.

As understood in FIG. 24, in the normal transition, it does not matter that the end transition time of the preceding still picture and the start transition time of the next still picture are different. However, when the cross transition is executed, the end transition of the preceding still picture and the start transition of the next still picture have to be executed during the same cross transition time. Therefore, when the internal cross transition is executed, the reproduction apparatus makes the setting on the side of the start transition valid and the setting on the side of the end transition invalid to execute the transition. Concretely, when the internal cross transition flag 741 in a certain playitem is set to "1", the reproduction apparatus makes the internal start transition type 742 and the internal start transition time 744 valid, and executes the cross transition according to them. For example, when the internal start transition type 742 is set to the slide, the internal end transition type 743 is set to the wipe, the internal start transition time 744 is set to m seconds, and the internal end transition time 745 is set to n seconds (n≠m), the cross transition is executed in the m-second cross transition time by the transition type of the slide.

In a case of the external cross transition, the process can be similar. Namely, when the external cross transition flag 731 in a certain playitem is set to "1", the cross transition is executed in the external transition between the end still picture of the playitem and the head still picture of the next playitem. The transition type and the cross transition time in that case may be the external start transition type 732 and the external start transition time 734 of the next item.

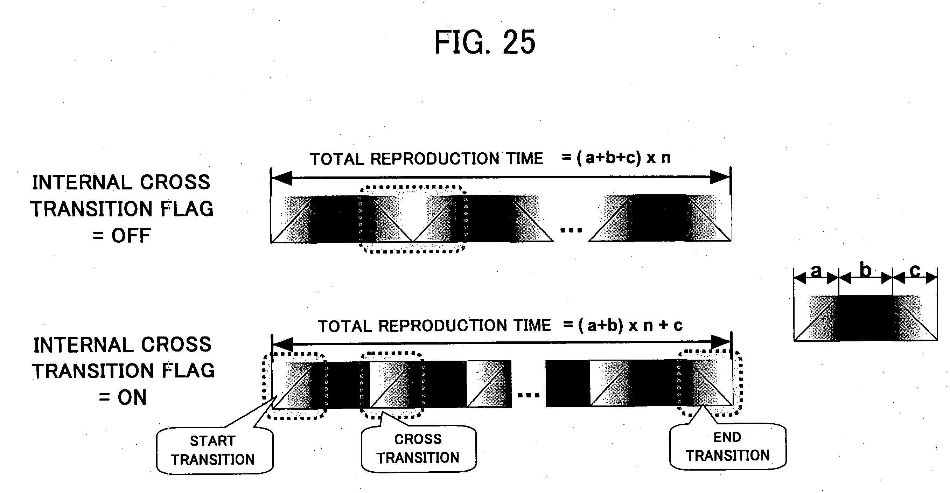

Based on whether or not the internal cross transition is executed for one item, the total reproduction time of the still pictures by the playitem becomes different. This will be explained with reference to FIG. 25. As shown in FIG. 25, it is assumed that the internal start transition time 744 of the still picture included in a certain playitem = "a", the internal end transition time 745 = "c" and the rest of time (i.e., a time obtained by subtracting the internal start transition time and the internal end transition time from the still picture total display time) ="b". When the internal cross transition flag is set to "0" (=OFF), if a number of still pictures (a number of images) defined by the item is n, the total reproduction time of one item = (a+b+c)×n. On the contrary, when the internal cross transition flag is set to "1" (=ON), if the number of still pictures (the number of images) defined by the item is n, the total reproduction time of the one playitem= (a+b) xn+c. This is because the internal end transition time 745 for each still picture is disregarded for executing the internal cross transition.

### (Still Picture Reproduction Process)

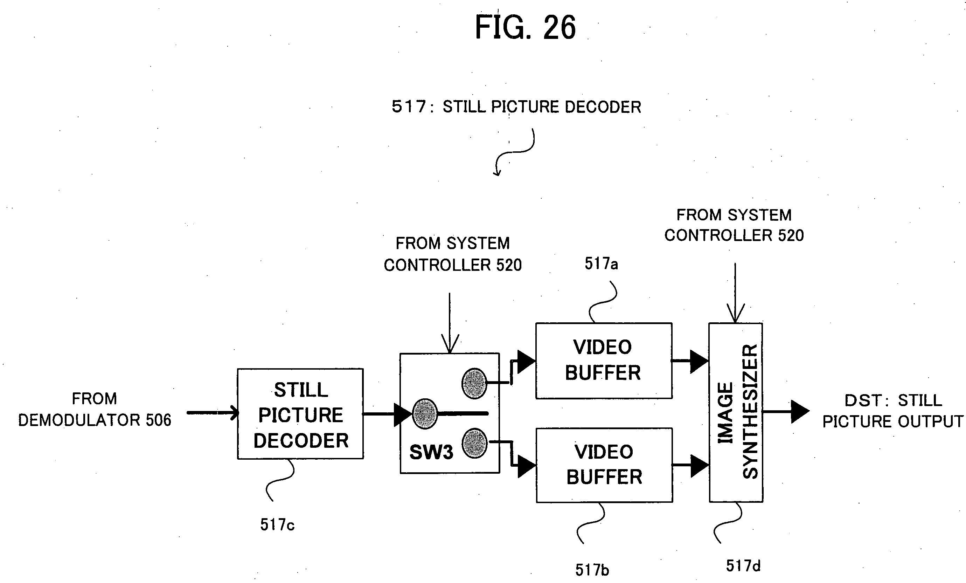

Next, the description will be given of the still picture reproduction in which the still picture item is used. FIG. 26 shows an internal configuration of the still picture decoder 517 of the information record reproduction apparatus shown in FIG. 14. As shown in FIG. 26, the still picture decoder 517 includes a still picture decoder 517c, a switch SW3, a video buffer 517a, a video buffer 517b and an image synthesizer 517d. The video buffer 517a and the video buffer 517b are used for storing one still picture data during the above-mentioned transition of the still picture, respectively.

The description will be given of a basic operation of the still picture reproduction with reference to FIG. 14 and FIG. 26. The system controller 520 executes a disc reproduction control of the optical disc 100, and the optical pickup 502 outputs the reading signal S7 to the demodulator 506. The demodulator 506 demodulates the recording signal S8 from the reading signal S7 and supplies it to the system controller 520 as the demodulated data D8. At the same time, the demodulator 506 supplies it to the still picture decoder 517. The system controller 520 extracts logical information file data (including the playlist information file 120 and the object information file 130) from the demodulated data D8, and determines a reproduction address based on them to execute the control of the disc and the pickup. Thereby, the still picture object included in the demodulated data D8 is transmitted to the still picture decoder 517 in the form of packets.

In the still picture decoder 517 having the configuration shown in FIG. 26, the still picture decoder 517c decodes the received still picture object, and generates the still picture data to store it in the video buffer 517a or 517b via the switch SW3. Then, by controlling the switch SW3, the system controller 520 stores the still picture data to be successively reproduced in the video buffers 517a and 517b alternately, in accordance with the still picture item. At the time of the transition of the still pictures, the system controller 520 controls the image synthesizer 517d, and executes the transition in accordance with the setting in the above-mentioned still effect 730. The still picture data DST synthesized by the image synthesizer 517d is displayed onto a display apparatus and the like.

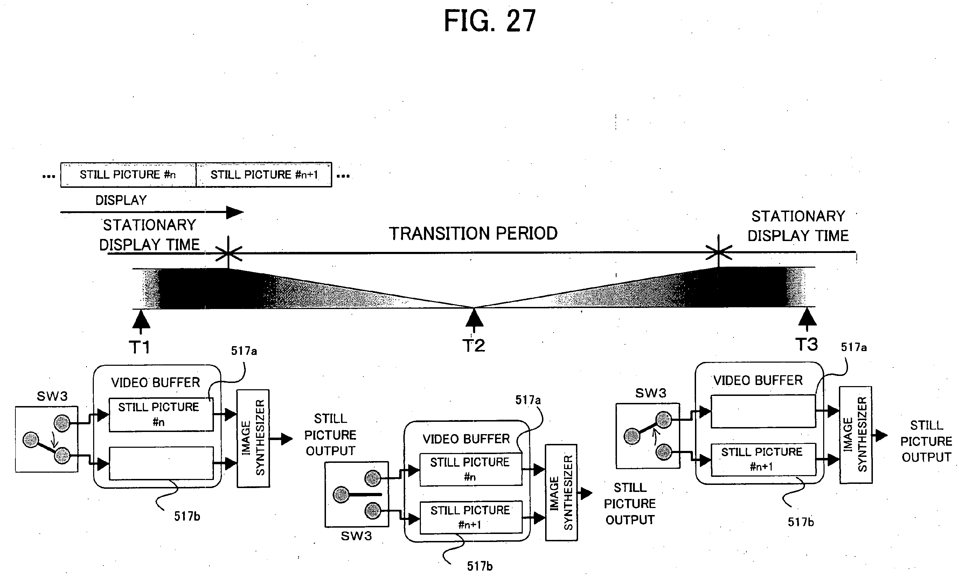

Next, the description will be given of a switching of the still picture data during the transition. FIG. 27 shows a data storage state of the video buffers 517a and 517b in the case of the normal transition. An example of FIG. 27 shows the normal transition from the still picture #n to the still picture #n+1. At a time T1 during a stationary reproduction time of the still picture #n, the still picture #n is stored in the video buffer 517a and is reproduced. Though the video buffer 517b stored the preceding still picture, data thereof was destructed afterward and the video buffer 517b became empty. It is noted that the empty video buffer 517b stores the still picture #n+1 by a switch time T2 from the still picture #n to the still picture #n+1 during the transition.

During the transition period, the still picture #n is outputted from the video buffer 517a until the switch time T2. However, once the output of the still picture #n+1 from the video buffer 517b starts at the switch time T2, the still picture #n in the video buffer 517a is destructed. Afterward, as shown in FIG. 27, the still picture #n+1 stored in the video buffer 517b is read out, and the other video buffer 517a is empty. However, the video buffer 517a stores the next still picture #n+2 by the next switch time of the transition. As described above, when the still picture #n is switched to the still picture #n+1 without interval (no display time) at the switch time T2, it is necessary to store the next still picture into the other video buffer by the switch time. However, when the interval is permitted at the switch time, the transition can be executed by using only one video buffer.

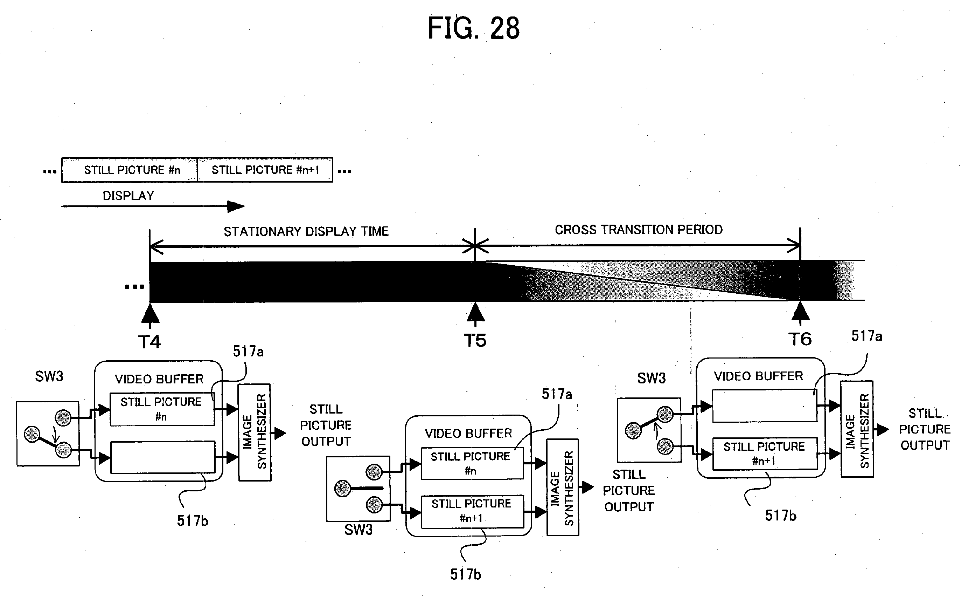

Next, the description will be given of a switching of the still picture data during the cross transition. FIG. 28 shows a state of data storage of the video buffers 517a and 517b in the case of the cross transition. An example of FIG. 28 shows the cross transition from the still picture #n to the still picture #n+1. A time T4 is a stationary reproduction period of the still picture #n, and the still picture #n is stored in the video buffer 517a. The other video buffer 517b is empty at the time T4, but the still picture #n+1 is decoded and is stored in the buffer 517b by a time T5 at which the cross transition is started.

At the time T5, the still picture #n is stored in the video buffer 517a, and the still picture #n+1 is stored in the video buffer 517b. The image synthesizer 517d synthesizes the outputs fromboth of the buffers 517a and 517b to execute the cross transition. When the cross transition period ends at a time T6, the still picture #n stored in the video buffer 517a is destructed, and the video buffer 517a becomes empty. It is noted that the video buffer 517a stores the next still picture #n+2 by the next cross transition period.

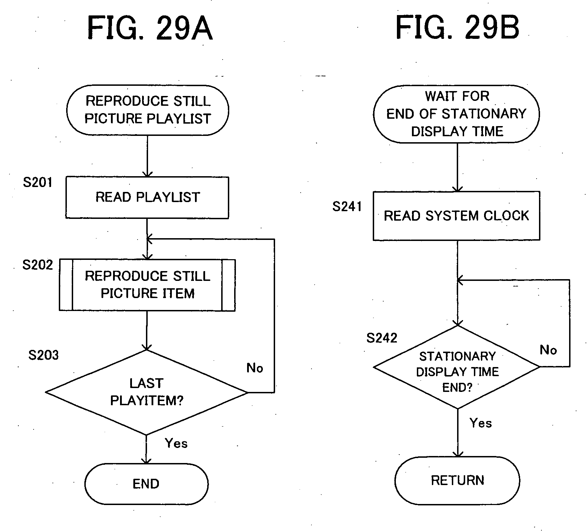

Next, the description will be given of the reproduction process of the still picture playlist with reference to flow charts of FIG. 29 to FIG. 31. FIG. 29A is a main routine of the still picture playlist reproduction. It is noted that a process below is basically executed by control of the system controller 520. First, the system controller 520 reads the playlist (step S201), and reproduces the plural still picture items included in the playlist in order (step S202). When the reproduction of the last item is completed (step S203; Yes), the process ends.

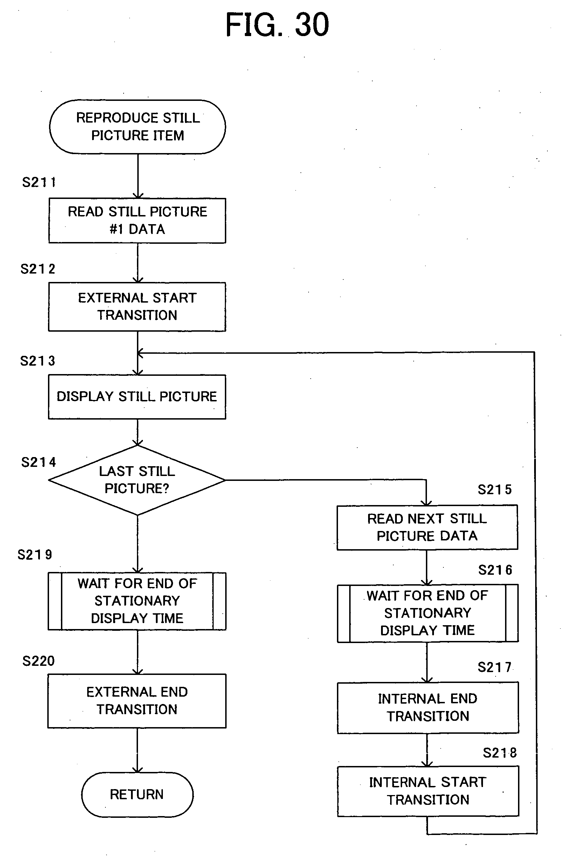

FIG. 30 shows details of the still picture playitem reproduction step (step S202) shown in FIG. 29A in a case of the normal transition. First, the system controller 520 reads the data of the still picture #1 into the video buffer 517a or 517b (tentatively, the video buffers 517a here) based on the image index number 721 shown in FIG. 21 (step S211), and executes the external start transition based on the external start transition type 732 and the external start transition time 734 in the still effect 730 (step S212). After the external start transition ends, the stationary display period of the still picture #1 starts, and the still picture #1 is displayed (step S213).

The system controller 520 determines whether or not the still picture is the last still picture in the item (step S214). When the still picture is not the last still picture, the system controller 520 reads the next still picture data (the still picture #2 in this example) into the other video buffer (the video buffer in which the preceding still picture #1 is not stored in step S211, i.e., the video buffer 517b here) (step S215), and waits for the end of the stationary display time of the still picture currently reproduced (the still picture #1 in this example) (step S216).

As shown in FIG. 29B, first, the system controller 520 reads a system clock (step S241), and determines whether or not the stationary display time passes (step S242). Thereby, the process of waiting for the end of the stationary display time is executed. The stationary display time is a period during which the still picture is completely displayed (i.e., a period other than the transition period). Concretely, the stationary display time can be obtained by subtracting the internal start transition time 744 and the internal end transition time 745 from the still picture total display time 723 in the still picture object playitem 720 shown in FIG. 21. When the stationary display time passes, the display time of the still picture ends (step S242; Yes), and the process returns to the routine shown in FIG. 30. According to the internal end transition type 743 and the internal end transition time 745 in the still effect 730, the internal end transition-is executed (step S217). Subsequently, according to the internal start transition type 742 and the internal start transition time 744, the internal start transition of the still picture #2 which has already been written into the video buffer 517b in step S215 is executed (step S218). When the internal start transition of the still picture #2 ends, the stationary display of the still picture #2 is performed (step S213).

As described above, steps S213 to S218 are repeated until the reproduction order of the last still picture included in the item being currently reproduced comes, and the plural still pictures are reproduced in order with the transition effect according to the setting in the still effect 730. When the reproduction order of the last still picture comes (step S214; Yes), the end of the stationary display time of the still picture is waited (step S219). This process is similar to the above-mentioned process explained with reference to FIG. 29B. When the stationary display time of the last still picture ends, the system controller 520 executes the external end transition of the item in accordance with the external end transition type 732 and the external end transition time 735 (step S220). Then, the reproduction of one still picture playitem ends.

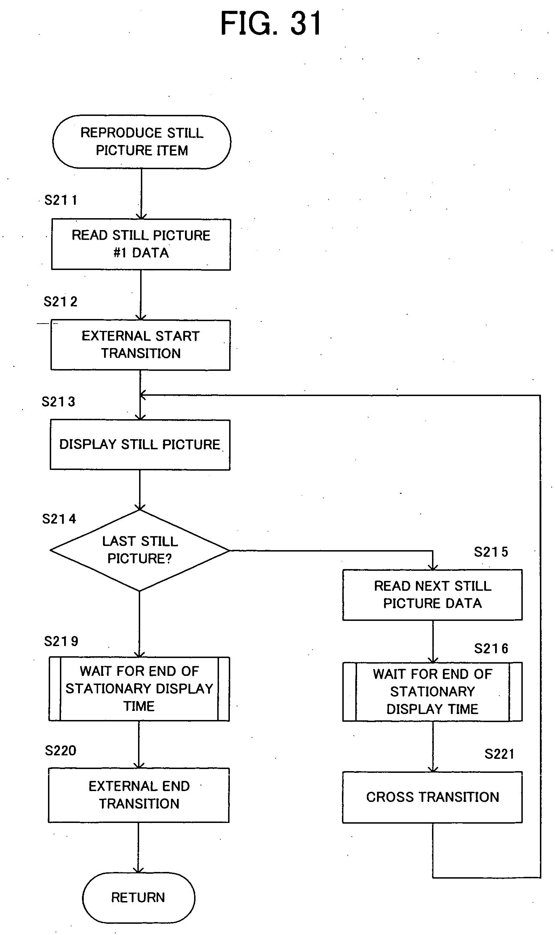

Next, the description will be given of the still picture playitem reproduction process in the case of the cross transition (step S202) with reference to FIG. 31. In the still picture playitem reproduction process in the case of the cross transition, the cross transition is executed (step S221) after the passage of the stationary display time of the one still picture in step S216, instead of the internal end transition and the internal start transition. This is a point different from the case of the normal transition, but other points are similar to the case of the normal transition.

As described above, according to the present embodiment, when the still picture object is reproduced in accordance with the still picture item included in the playlist, the information of the transition effect in the successive reproduction of the plural still pictures is recorded in the still picture item. Therefore, based on the set transition effect (i.e., transition type, transition time, whether to execute the cross transition or the normal transition, and the like), various kinds of transitions can be executed, and variation can be given to the reproduction of the still picture. In addition, since the transition effect is set the plural still pictures grouped by the item unit, various kinds of transition effects can be set by an information amount smaller than a case that the transition effect is set to each still picture.

Incidentally, in the aforementioned embodiment, the explanation is made on the optical disc 100 as an example of the information record medium and the recorder or player of the optical disc 100 as an example of the information record reproduction apparatus. Nevertheless, the present invention is not limited to the optical disc and the player or recorder thereof, but is applicable to various record media and the recorders or players thereof, supporting other high density recording or high transfer rate.

The present invention is not limited to the above-described embodiments, and various changes may be made, if desired, without departing from the essence or spirit of the invention which can be read from the claims and the entire specification. An information record medium, an apparatus for and a method of recording the information, an apparatus for and a method of reproducing the information, an apparatus for and a method of recording and reproducing the information, a computer program for controlling the record or the reproduction, and a data structure including a control signal, all of which involves such changes, are also intended to be within the technical scope of the present invention.

### Industrial Applicability

An information record medium, an apparatus for and a method of recording the information, an apparatus for and a method of reproducing the information, an apparatus for and a method of recording and reproducing the information, a computer program for controlling the record or the reproduction, and a data structure including a control signal, all of which are according to the present invention, can be applied to a high-density optical disc for consumer or industrial use, such as a DVD, on which various information, such as the video information, the audio information and the sub-picture information, can be recorded at high density and further can be applied to a DVD player, a DVD recorder, and the like. Moreover, they can be applied to an information record medium, an information record reproduction apparatus, or the like, which are mounted on or can be connected to various computer equipment for consumer or industrial use, for example.

## Claims

1. An information record medium comprising:
plural still picture information; and
transition effect information of each still picture information between plural still picture information to be successively reproduced,
wherein the transition effect information includes:
transition effect kind information indicating a kind of transition effect;
transition effect time information indicating a period of the transition effect; and
cross transition information indicating whether or not to apply a cross transition executing the transition effect between the successive still picture information in parallel in terms of time.

2. The information record medium according to claim 1, wherein the transition time information includes:
start transition effect time information indicating a period of a transition effect at a time of starting a display of the still picture information; and
end transition effect time information indicating a period of a transition effect at a time of ending the display of the still picture information.

3. The information record medium according to claim 1, wherein the cross transition is a process of executing a transition at a time of ending a display of first still picture information and a transition at a time of starting a display of second still picture information to be reproduced subsequently to the first still picture information during a same period.

4. The information record medium according to claim 1, wherein the transition effect information is recorded for each still picture set constructed by the still picture information to be successively reproduced, and the cross transition information is identically defined for all the transitions between the plural still picture information included in the still picture set.

5. The information record medium according to claim 1, further comprising playlist information defining a reproduction sequence of the plural still pictures,
wherein the transition effect information is included in the playlist information.

6. An information record apparatus comprising:
a first record unit which records plural still picture information on an information record medium; and
a second record unit which records, on the information record medium, transition effect information of each still picture information between plural still picture information to be successively reproduced,
wherein the transition effect information includes:
transition effect kind information indicating a kind of transition effect;
transition effect time information indicating a period of the transition effect; and
cross transition information indicating whether or not to apply a cross transition executing a transition effect between the successive still picture information in parallel in terms of time.

7. An information record method comprising:
a first record process which records plural still picture information on an information record medium; and
a second record process which records, on the information record medium, transition effect information of each still picture information between plural still picture information to be successively reproduced,
wherein the transition effect information includes:
transition effect kind information indicating a kind of transition effect;
transition effect time information indicating a period of the transition effect; and
cross transition information indicating whether or not to apply a cross transition executing the transition effect between the successive still picture information in parallel in terms of time.

8. An information reproduction apparatus which reproduces-the information record medium according to claim 1, comprising:
a reading unit which reads the plural still picture information and the transition effect information from the information record medium; and
a reproduction unit which controls presence or absence of application of the cross transition in accordance with the transition effect information and reproduces the plural still pictures.

9. An information reproduction method which reproduces the information record medium according to claim 1, comprising:
a reading process which reads the plural still picture information and the transition effect information from the information record medium; and
a reproduction process which controls presence or absence of application of the cross transition in accordance with the transition effect information and reproduces the plural still pictures.

10. An information record reproduction apparatus comprising:
a first record unit which records plural still picture information on an information record medium;
a second record unit which records, on the information record medium, transition effect information including transition effect kind information indicating a kind of transition effect, transition effect time information indicating a period of the transition effect and cross transition information indicating whether or not to apply a cross transition executing the transition effect between successive still picture information in parallel in terms of time, for each still picture information between the plural still picture information to be successively reproduced;
a reading unit which reads the plural still picture information and the transition effect information from the information record medium; and
a reproduction unit which controls presence or absence of application of the cross transition in accordance with the transition effect information and reproduces the plural still pictures.

11. An information record reproduction method comprising:
a first record process which records plural still picture information on an information record medium;
a second record process which records, on the information record medium, transition effect information including transition effect kind information including a kind of transition effect, transition effect time information indicating a period of the transition effect and cross transition information indicating whether or not to apply a cross transition executing the transition effect between successive still picture information in parallel in terms of time, for each still picture information between the plural still picture information to be successively reproduced;
a reading process which reads the plural still picture information and the transition effect information from the information record medium; and
a reproduction process which controls presence or absence of application of the cross transition in accordance with the transition effect information and reproduces the plural still pictures.

12. A computer program product in a computer-readable medium executed by an information record apparatus comprising a computer, the computer program product making the computer function as:
a first record unit which records plural still picture information on an information record medium; and
a second record unit which records, on the information record medium, transition effect information of each still picture information between plural still picture information to be successively reproduced,
wherein the transition effect information includes transition effect kind information indicating a kind of transition effect, transition effect time information indicating a period of the transition effect, cross transition information indicating whether or not to apply cross transition executing the transition effect between the successive still picture information in parallel in terms of time.

13. A computer program product in a computer-readable medium executed by an information reproduction apparatus comprising a computer, the computer program product making the computer function as:
a reading unit which reads the plural still picture information and the transition effect information from the information record medium according to claim 1; and
a reproduction unit which controls presence or absence of application of the cross transition in accordance with the transition effect information and reproduces the plural still pictures.
